# EUROPEAN PATENT SPECIFICATION

(11) **EP 0 765 026 B1**
(45) Date of publication and mention of the grant of the patent: **05.12.2001**
(21) Application number: 96115035.6
(22) Date of filing: 19.09.1996
(51) Int. Cl.: H02P 6/16, H02P 6/14

(54) **Brushless motor**
Bürstenlöser Motor
Moteur sans balai

(30) Priority: 20.09.1995 JP 24111895; 26.10.1995 JP 27881595; 15.03.1996 JP 8719396
(43) Date of publication of application: 26.03.1997
(73) Proprietor: MATSUSHITA ELECTRIC INDUSTRIAL CO., LTD., Kadoma-shi, Osaka 571-8501 (JP)
(72) Inventor: Gotou, Makoto, Nishinomiya City, 663 (JP)
(74) Representative: Dr. Elisabeth Jung Dr. Jürgen Schirdewahn Dipl.-Ing. Claus Gernhardt

(56) References cited:
- EP-A- 0 189 676
- EP-A- 0 363 169
- US-A- 5 160 873
- US-A- 5 182 500
- PATENT ABSTRACTS OF JAPAN vol. 12, no. 379 (E-667) [3226] , 11 October 1988 & JP-A-63 124791 (MATSUSHITA ELECTRIC IND CO LTD), 28 May 1988,

## Description

### 1. FIELD OF THE INVENTION

The invention relates to a brushless motor in which the currents to the three-phase coils are distributed electronically.

### 2. DESCRIPTION OF THE RELATED ART

Recently, a brushless motor, in which the currents to three-phase coils are distributed electronically, is widely used. FIG. 132 shows the configuration of such a prior art brushless motor of the kind defined by the precharacterizing features of claim 1.

Hall elements 9911, 9912, and 9913 detect magnetic poles of a rotor rotary magnet 9901 and output three-phase detecting signals which correspond to the rotational position. The outputs of the Hall elements 9911, 9912, and 9913 are amplified by a predetermined factor by amplifiers 9921, 9922, and 9923, respectively. Multipliers 9931, 9932, and 9933 respectively multiply the outputs of the amplifiers 9921, 9922, and 9923 by a command signal of a command circuit 9950 and obtain three-phase multiplied signals, each of which has an amplitude corresponding to the command signal. Power amplifiers 9941, 9942, and 9943 amplify the outputs of the multipliers 9931, 9932, and 9933 and apply the amplified outputs to three-phase coils 9902, 9903, and 9904, respectively.

As a result, three-phase driving signals which vary in accordance with the rotation of the rotor magnet 9901 are supplied to the three-phase coils 9902, 9903, and 9904, so that the rotor magnet 9901 continues to rotate in a predetermined direction.

However, the configuration of the prior art such as that shown in FIG. 132 has the following problems.

The amplitudes of the driving signals are proportional to the results of the multiplications of the command signal of the command circuit 9950 and the outputs of the Hall elements 9911, 9912, and 9913. Due to variations in the sensitivities of the Hall elements and in the magnetic field of the rotor magnet 9901, there appear variations in the amplitudes of the detecting signals of the Hall elements 9911, 9912, and 9913. This causes the variation or difference of the amplitudes of the driving signals. Particularly, the sensitivity-variation of a Hall element is very large.

Conventionally, in order to reduce the variation or difference of the sensitivities between the Hall elements, matching of the three Hall elements of each motor is performed in such a manner that the sensitivity ranges of the Hall elements are coincident with each other. However, there remain large variation of the amplitudes of the driving signals due to the variation of the sensitivities of Hall elements among motors in mass production. This makes the variation of the torque with respect to the command signal of the command circuit 9950, thereby producing a large problem in mass production.

From the EP-A2-0 363 169 there is known a system for driving a brushless motor comprises motor drive coils belonging to a plurality of phases respectively, a plurality of pairs of drive transistors connected to the drive coils respectively, a distribution circuit for sequentially distributing drive-coil energization switching signals to the plural drive transistors respectively, a slope synthesizer for smoothing leading and trailing slope portions of the drive-coil energization switching signals so as to apply the smoothed energization switching signals to the drive transistors respectively through the distribution circuit, a voltage-controlled oscillator for supplying a signal having a suitable frequency as an input to the slope synthesizer, a phase error detector for detecting the phase difference between counter-electromotive voltages induced in the drive coils and the drive-coil energization switching signals in a drive-coil energization pause period, and an error amplifier for amplifying the output signal of the phase error detector and applying the amplified phase error signal as an input to the voltage-controlled oscillator.

It is an object of the invention to solve the problems of the prior art and provide a brushless motor of the kind defined by the precharacterizing features of claim 1 which, even when there occur variation of Hall elements or the like, is hardly affected by the variation.

This object is attained by the characterizing features of claim 1.

In the configuration of the brushless motor of the invention: the first output current signal corresponding to the command signal is distributed to the three-phase first distributed current signals by the altering signals corresponding to the position detection signals the second output current signal corresponding to the command signal is distributed to the three-phase second distributed current signals by the altering signals corresponding to the position detection signals; the first and second distributed current signals are composed together so as to produce the three-phase distributed signals; and the driving signals corresponding to the distributed signals of the composing means are supplied to the three-phase coils. Consequently, influences due to variation in sensitivities of position detecting elements and that in gains of processing circuits are very small so that variation of driving gains of brushless motors in mass production are reduced remarkably.

As a result, also the driving signals supplied to the terminals of the three-phase coils are not affected by the variation in the detection outputs of the position detecting means so that accurate driving signals corresponding to the command signal is given. Therefore, variation of the generated torque is very small.

The brushless motor of another aspect of the invention comprises:

These and other configurations and operations will be described in detail in the description of embodiments.

### BRIEF DESCRIPTION OF THE DRAWINGS

FIG. 1 is a block diagram of Embodiment 1 of the invention.
FIG. 2 is a diagram showing the structure of a motor of the embodiment.
FIG. 3 is a specific circuit diagram of a command current circuit 50 of Embodiment 1.
FIG. 4 is a specific circuit diagram of a position detector 21 and an altering signal producing circuit 22 of the embodiment.
FIG. 5 is a specific circuit diagram of a first distributing circuit 31, a second distributing circuit 32, and a distributing composer 33 of the embodiment.
FIG. 6 is a specific circuit diagram of a first driving circuit 41, a second driving circuit 42, and a third driving circuit 43 of the embodiment.
FIG. 7 is a waveform chart illustrating the operation of the embodiment.
FIG. 8 is a block diagram of Embodiment 2 of the invention.
FIG. 9 is a specific circuit diagram of a command current circuit 301 of Embodiment 2.
FIG. 10 is a specific circuit diagram of a multiplied command current circuit 302 of the embodiment.
FIG. 11 is a specific circuit diagram of a command output circuit 303 of the embodiment.
FIG. 12 is a waveform chart illustrating the operation of Embodiment 2.
FIG. 13 is a block diagram of Embodiment 3 of the invention.
FIG. 14 is a diagram showing the structure of a motor of Embodiment 3.
FIG. 15 is a specific circuit diagram of a position detector 521 and an altering signal producing circuit 522 of the embodiment.
FIG. 16 is a specific circuit diagram of a first distributing circuit 531 and a second distributing circuit 532 of the embodiment.
FIG. 17 is a specific circuit diagram of a distributing composer 533 of the embodiment.
FIG. 18 is a specific circuit diagram of a first driving circuit 541, a second driving circuit 542, and a third driving circuit 543 of the embodiment.
FIG. 19 is a specific circuit diagram of a command current circuit 551.
FIG. 20 is a specific circuit diagram of a multiplied command current circuit 552 of the embodiment.
FIG. 21 is a specific circuit diagram of a command output circuit 553 of the embodiment.
FIG. 22 is a waveform chart illustrating the operation of Embodiment 3.
FIG. 23 is a block diagram of Embodiment 4 of the invention.
FIG. 24 is a specific circuit diagram of a position detector 521 and an altering signal producing circuit 1022 of the embodiment.
FIG. 25 is a specific circuit diagram of a distributing composer 1033 of the embodiment.
FIG. 26 is a specific circuit diagram of a command output circuit 1053 of Embodiment 4.

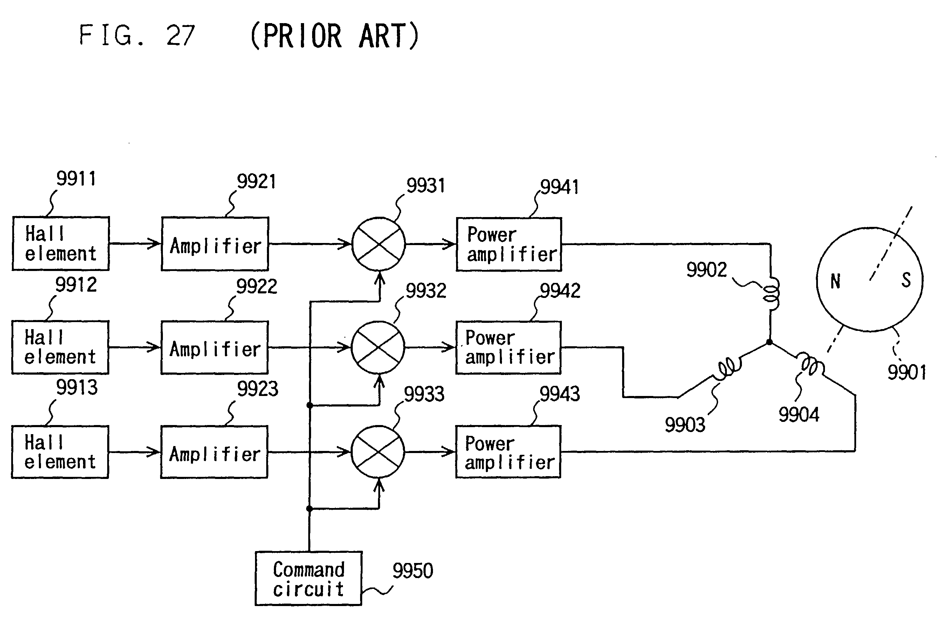

FIG. 27 is a diagram showing the structure of a prior art motor.

### DESCRIPTION OF THE PREFERRED EMBODIMENT

Hereinafter, the invention in detail will be described on its embodiments with reference to the accompanying drawings.

### EMBODIMENT 1

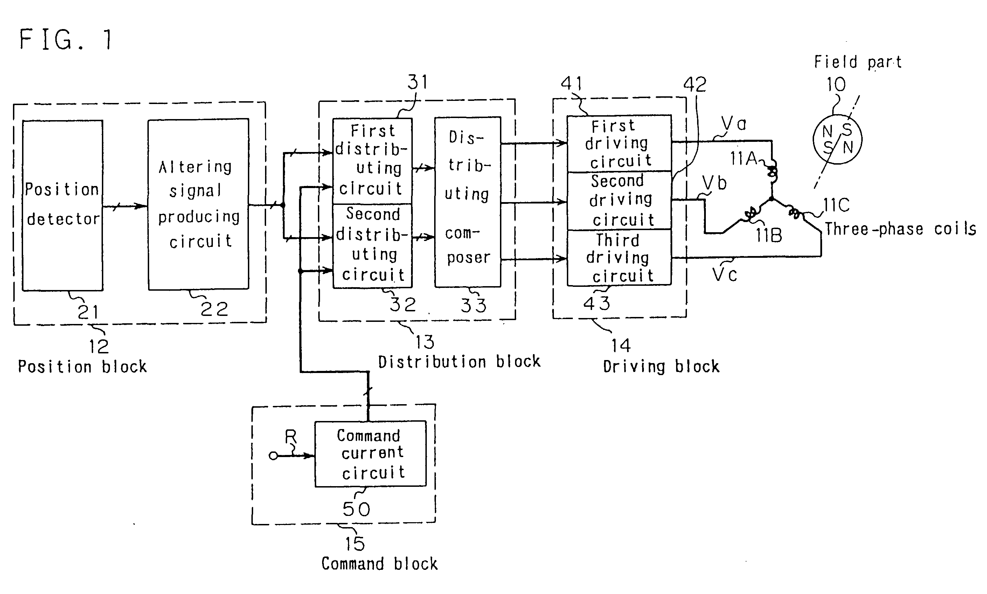

Figs. 1 to 6 show a brushless motor of a first embodiment of the invention. FIG. 1 shows the whole configuration of the motor.

In the circuit block diagrams, a connection line to or from circuit block with oblique short bar crossing therewith represents plural connection lines or a connection line for aggregate signals.

A field part 10 as the field means shown in FIG. 1 is mounted on a rotor or a movable body of the motor and forms plural magnetic field poles by a permanent magnet. And the field part 10 generates field magnetic fluxes. Three-phase coils 11A, 11B, and 11C are mounted on the stator or a stationary body and arranged so as to be electrically shifted by a predetermined angle (120 electrical deg.) with respect to the magnetic fluxes of the field part 10.

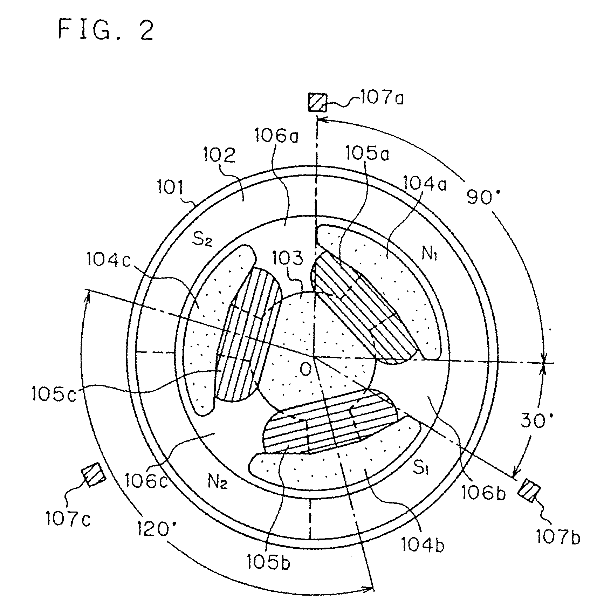

FIG. 2 specifically shows the configuration of the field part 10 and the three-phase coils 11A, 11B, and 11C. In an annular permanent magnet 102 attached to the inner side of the rotor 101, the inner and end faces are magnetized so as to form four poles (N, S, N and S in turn), thereby constituting the field part 10 shown in FIG. 1. An armature core 103 is placed at a position of the stator which opposes the poles of the permanent magnet 102. Three salient poles 104a, 104b, and 104c are disposed in the armature core 103 at intervals of 120 deg. Three-phase coils 105a, 105b, and 105c (corresponding to the three-phase coils 11A, 11B, and 11C shown in FIG. 1) are wound on the salient poles 104a, 104b, and 104c using winding slots 106a, 106b, and 106c formed between the salient poles, respectively. Among the coils 105a, 105b, and 105c, phase differences of 120 deg. in electric angle are established with respect to intercrossing magnetic fluxes from the permanent magnet 102 (one set of N and S poles corresponds to an electric angle of 360 deg.). Three position detecting elements 107a, 107b, and 107c (for example, Hall elements which are magnetoelectrical converting elements) are arranged on the stator and detect the poles of the end face of the permanent magnet 102, thereby obtaining three-phase detection signals corresponding to relative positions of the field part and the coils. In the embodiment, the center of the coils and that of the position detecting elements are shifted in phase by an electric angle of 90 deg. When driving signals which are in phase with the detection signals of the position detecting elements are applied to the coils, a rotation force in a predetermined direction can be obtained.

A command block shown in FIG. 1 comprises a command current circuit 50, and outputs first and second output current signals corresponding to a command signal R. The first and second output current signals are supplied to first and second distributing circuits 31 and 32 of a distribution block 13, respectively.

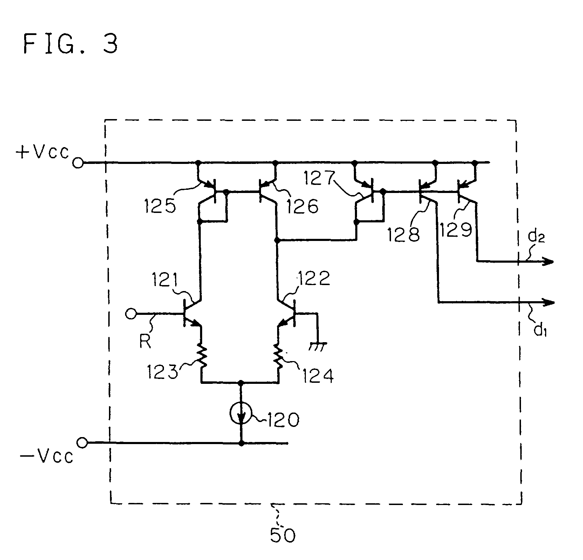

FIG. 3 specifically shows the command current circuit 50. In the circuit to which +Vcc and -Vcc (+Vcc = 9 V and -Vcc = -9 V) are applied, transistors 121 and 122, and resistors 123 and 124 constitute a differential circuit which operates in correspondence with the command signal R to distribute the current of a constant current source 120 to the collectors of the transistors 121 and 122. The collector currents of the transistors 121 and 122 are compared with each other by a current mirror circuit consisting of transistors 125 and 126, and the difference current is output through a current mirror circuit consisting of transistors 127, 128, and 129. As a result, first and second output current signals d1 and d2 are obtained (d1 and d2 are outflow currents). Therefore, the output current signals d1 and d2 maintain the same current value corresponding to the command signal R (when the command signal R is lower than the ground level 0 V, d1 and d2 are increased). The first output current signal d1 is supplied to the first distributing circuit 31 of the distribution block 13, and the second output current signal d2 to the second distributing circuit 32 of the distribution block 13.

A position block 12 shown in FIG. 1 comprises the position detector 21 and an altering signal producing circuit 22, produces altering signals from detection signals of position detecting elements of the position detector 21, and supplied the altering signals to the first and second distributing circuits 31 and 32 of the distribution block 13.

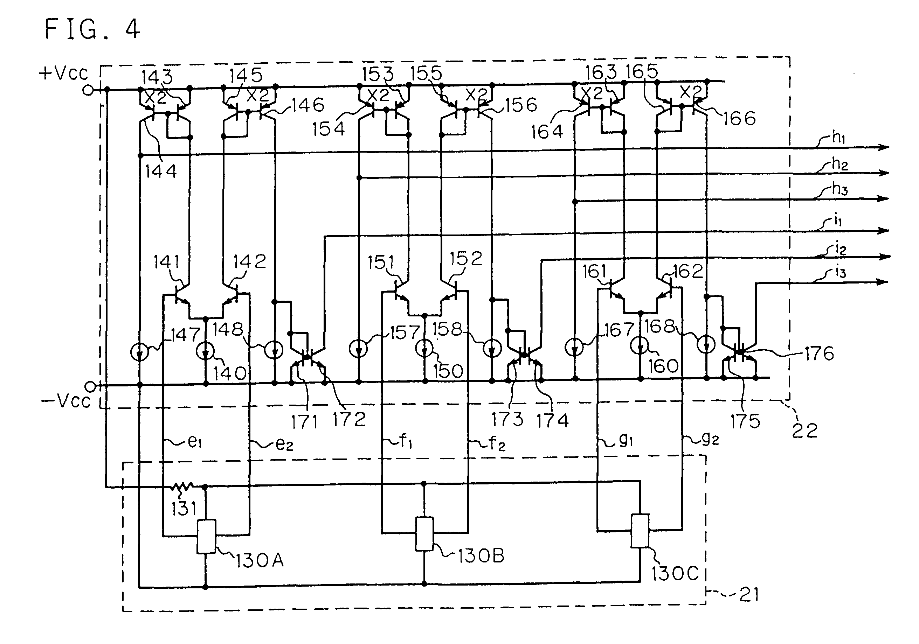

FIG. 4 specifically shows the position detector 21 and the altering signal producing circuit 22. The position detecting elements 130A, 130B, and 130C of the position detector 21 correspond to the position detecting elements 107a, 107b, and 107c of FIG. 2. The voltage is applied in parallel to the position detecting elements via a resistor 131.

Differential detection signals e1 and e2 corresponding to the detected magnetic field of the field part 10 (corresponding to the permanent magnet 102 of FIG. 2) are output from output terminals of the position detecting element 130A (e1 and e2 vary in reversed phase), and then supplied to the bases of differential transistors 141 and 142 of the altering signal producing circuit 22.

Differential detection signals f1 and f2 corresponding to the detected magnetic field of the field part 10 are output from output terminals of the position detecting element 130B and then supplied to the bases of differential transistors 151 and 152.

Differential detection signals g1 and g2 corresponding to the detected magnetic field of the field part 10 are output from output terminals of the position detecting element 130C and then supplied to the bases of differential transistors 161 and 162.

As the rotational movement of the field part 10 proceeds, the detection signals e1, f1, and g1 (and e2, f2, and g2) smoothly vary so as to function as three-phase signals which are electrically separated in phase from each other by 120 deg.

Constant current sources 140, 147, 148, 150, 157, 158, 160, 167, and 168 of the altering signal producing circuit 22 supply a current of the same constant value. In correspondence with the detection signals e1 and e2, differential transistors 141 and 142 distribute the value of the current of the constant current source 140 to the collectors. The collector current of the transistor 141 is amplified two times by a current mirror circuit consisting of transistors 143 and 144. An altering signal h1 is obtained from the junction of the collector output of the transistor 144 and the constant current source 147. The collector current of the transistor 142 is amplified two times by a current mirror circuit consisting of transistors 145 and 146. An altering signal i1 is obtained via a current mirror circuit which consists of transistors 171 and 172 and which is connected to the junction of the collector output of the transistor 146 and the constant current source 148. Similarly, in correspondence with the detection signals f1 and f2, differential transistors 151 and 152 distribute the current of the constant current source 150 to the collectors. The collector current of the transistor 151 is amplified two times by a current mirror circuit consisting of transistors 153 and 154. An altering signal h2 is obtained from the junction of the collector output of the transistor 154 and the constant current source 157. The collector current of the transistor 152 is amplified two times by a current mirror circuit consisting of transistors 155 and 156. An altering signal i2 is obtained via a current mirror circuit which consists of transistors 173 and 174 and which is connected to the junction of the collector output of the transistor 156 and the constant current source 158. Furthermore, in correspondence with the detection signals g1 and g2, differential transistors 161 and 162 distribute the current of the constant current source 160 to the collectors. The collector current of the transistor 161 is amplified two times by a current mirror circuit consisting of transistors 163 and 164. An altering signal h3 is obtained from the junction of the collector output of the transistor 164 and the constant current source 167. The collector current of the transistor 162 is amplified two times by a current mirror circuit consisting of transistors 165 and 166. An altering signal i3 is obtained via a current mirror circuit which consists of transistors 175 and 176 and which is connected to the junction of the collector output of the transistor 166 and the constant current source 168.

The altering signals h1, h2, and h3 are three-phase signals which analoguely vary in correspondence with the detection signals, and are supplied to the first distributing circuit 31 (because of the configuration of the first distributing circuit 31 which will be described later, the altering signals h1, h2, and h3 function as outflow currents as seen from the altering signal producing circuit 22). The altering signals i1, i2, and i3 are three-phase signals which analoguely vary in correspondence with the detection signals, and supplied to the second distributing circuit 32 (because of the configuration of the second distributing circuit 32 which will be described later, the altering signals i1, i2, and i3 function as inflow currents as seen from the altering signal producing circuit 22). The altering signals h1 and i1 are alternatingly increased in level, the altering signals h2 and i2 are alternatingly increased in level, and the altering signals h3 and i3 are alternatingly increased in level.

The first distributing circuit 31 of the distribution block 13 of FIG. 1 obtains three-phase first distributed current signals to which the first output current signal d1 is distributed in correspondence with the altering signals h1, h2, and h3 of the altering signal producing circuit 22. The second distributing circuit 32 obtains three-phase second distributed current signals to which the second output current signal d2 is distributed in correspondence with the altering signals i1, i2, and i3 of the altering signal producing circuit 22. A distributing composer 33 composes the first and second distributed current signals into three-phase distributed signals, and supplies the distributed signals to a driving block 14.

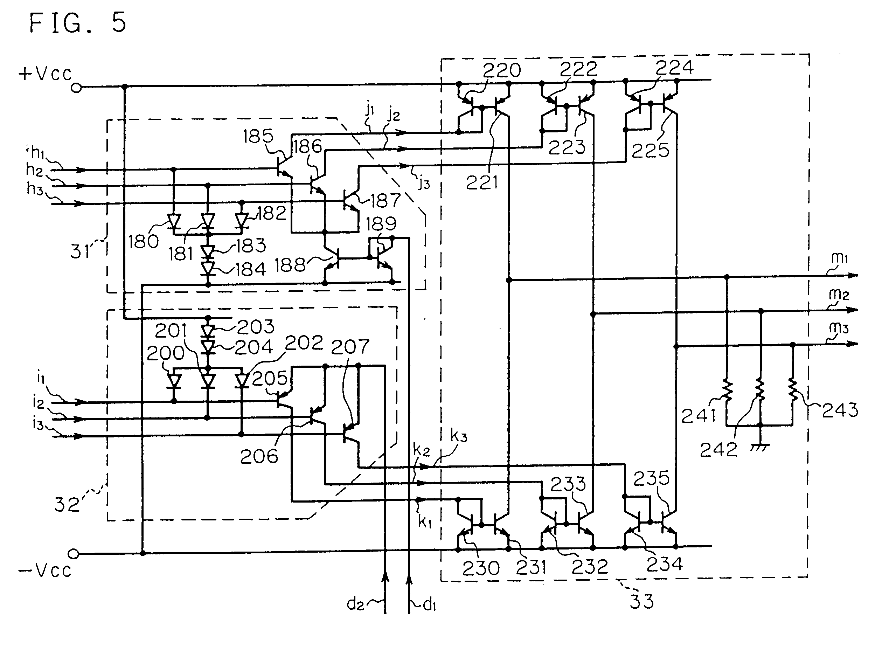

FIG. 5 specifically shows the configuration of the first distributing circuit 31, the second distributing circuit 32, and the distributing composer 33 of the distribution block 13. The altering signals h1, h2, and h3 which are input to the first distributing circuit 31 cause currents to flow into first diodes 180, 181, and 182, so that voltage signals corresponding to the inflow current values of the signals h1, h2, and h3 are generated. In the first diodes 180, 181, and 182, the ends of one side are connected to each other and the other ends are connected to the bases of first distributing transistors 185, 186, and 187, respectively. The first output current signal d1 of a command block 15 is supplied via a current mirror circuit consisting of transistors 188 and 189, to the emitters of the first distributing transistors 185, 186, and 187 which are connected to each other. In correspondence with the altering signals h1, h2, and h3, therefore, the first distributing transistors 185, 186, and 187 distribute the first output current signal d1 so as to generate the three-phase first distributed current signals j1, j2, and j3 (inflow currents) which analoguely vary. Diodes 183 and 184 produce a voltage bias.

The first distributed current signal j1 of the first distributing circuit 31 varies responding with a result h1·d1 of a multiplication of the altering signal h1 (the inflow current value) and the first output current signal d1 (the current value) of the command block 15, the first distributed current signal j2 varies responding with a result h2·d1 of a multiplication of the altering signal h2 and the first output current signal d1, and the first distributed current signal j3 varies responding with a result h3·d1 of a multiplication of the altering signal h3 and the first output current signal d1 (the value of the composed current j1+j2+j3 of the first distributed current signals is equal to the first output current signal d1).

The altering signals i1, i2, and i3 which are input to the second distributing circuit 32 cause currents to flow out from second diodes 200, 201, and 202, so that voltage signals corresponding to the outflow current values of the signals i1, i2, and i3 are generated. In the second diodes 200, 201, and 202, the ends of one side are connected to each other and the other ends are connected to the bases of second distributing transistors 205, 206, and 207, respectively. The second output current signal d2 of the command block 15 is supplied to the emitters of the second distributing transistors 205, 206, and 207 which are connected to each other. In correspondence with the altering signals i1, i2, and i3, therefore, the second distributing transistors 205, 206, and 207 distribute the second output current signal d2 so as to generate the three-phase second distributed current signals k1, k2, and k3 (outflow currents) which analoguely vary. Diodes 203 and 204 produce a voltage bias.

The second distributed current signal k1 of the second distributing circuit 32 varies responding with a result i1·d2 of a multiplication of the altering signal i1 (the outflow current value) and the second output current signal d2 (the current value) of the command block 15, the second distributed current signal k2 varies responding with a result i2·d2 of a multiplication of the altering signal i2 and the second output current signal d2, and the second distributed current signal k3 varies responding with a result i3·d2 of a multiplication of the altering signal i3 and the second output current signal d2 (the value of the composed current k1+k2+k3 of the second distributed current signals is equal to the second output current signal d2).

Three current mirror circuits respectively consisting of transistors 220 and 221, 222 and 223, and 224 and 225 of the distributing composer 33 invert the first distributed current signals j1, j2, and j3 and output the inverted signals. Three current mirror circuits respectively consisting of transistors 230 and 231, 232 and 233, and 234 and 235 of the distributing composer 33 invert the second distributed current signals k1, k2, and k3 and output the inverted signals. The first and second distributed current signals j1 and k1 are composed together at the junction of the respective current mirror circuits, and a composed distributed current signal corresponding to a difference current (j1 - k1) is generated. The composed distributed current signal is supplied to a resistor 241 so as to produce a distributed signal m1 appearing in the form of the voltage drop of the resistor 241. Similarly, the first and second distributed current signals j2 and k2 are composed together at the junction of the respective current mirror circuits, and a composed distributed current signal corresponding to a difference current (j2 - k2) is generated. The composed distributed current signal is supplied to a resistor 242 so as to produce a distributed signal m2 appearing in the form of the voltage drop of the resistor 242. Furthermore, the first and second distributed current signals j3 and k3 are composed together at the junction of the respective current mirror circuits, and a composed distributed current signal corresponding to a difference current (j3 - k3) is generated. The composed distributed current signal is supplied to a resistor 243 so as to produce a distributed signal m3 appearing in the form of the voltage drop of the resistor 243.

In this way, the distributed signals m1, m2, and m3 appear as three-phase voltage signals corresponding to the altering signals and have a predetermined amplitude which depends on the current values of the output current signals d1 and d2 of the command block 15 (the amplitudes are not affected by the amplitudes of the detection signals and the altering signals).

The driving block 14 of FIG. 1 comprises a first driving circuit 41, a second driving circuit 42, and a third driving circuit 43, and supplies driving signals Va, Vb, and Vc, which are power-amplified signals corresponding to the distributed signals m1, m2, and m3 of the distribution block 13, to the terminals of the three-phase coils 11A, 11B, and 11C.

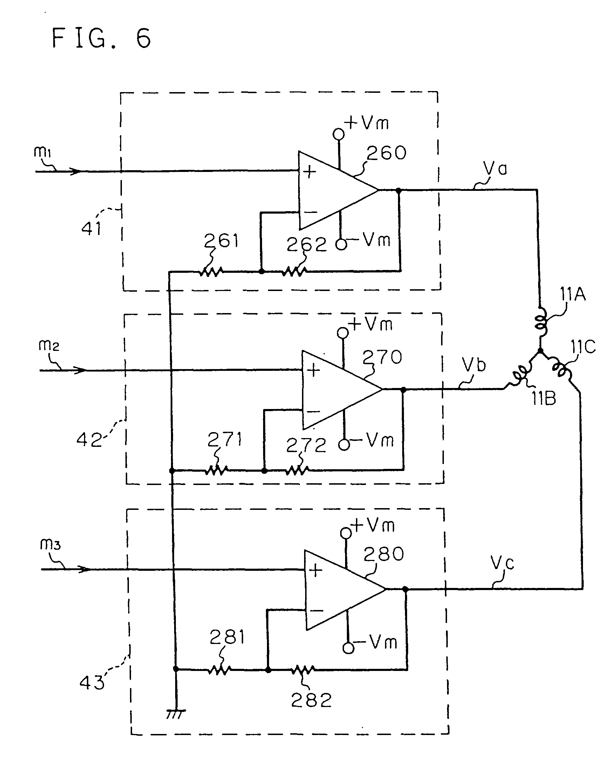

FIG. 6 specifically shows the configuration of the first driving circuit 41, the second driving circuit 42, and the third driving circuit 43. The distributed signal m1 is input to the noninverting terminal of an amplifier 260 of the first driving circuit 41 and amplified with an amplification factor defined by resistors 261 and 262, thereby producing the driving signal Va. The driving signal is supplied to the power input terminal of the coil 11A. Similarly, the distributed signal m2 is input to the noninverting terminal of an amplifier 270 of the second driving circuit 42 and amplified with an amplification factor defined by resistors 271 and 272, thereby producing the driving signal Vb. The driving signal is supplied to the power input terminal of the coil 11B. Furthermore, the distributed signal m3 is input to the noninverting terminal of an amplifier 280 of the second driving circuit 43 and amplified with an amplification factor defined by resistors 281 and 282, thereby producing the driving signal Vc. The driving signal is supplied to the power input terminal of the coil 11C. The amplifiers 260, 270, and 280 are supplied with power source voltages +Vm and - Vm (+Vm = 15 V, -Vm = -15 V).

As a result of the supply of the driving signals Va, Vb, and Vc, three-phase driving currents are supplied to the three-phase coils 11A, 11B, and 11C, so that a driving force is generated in a predetermined direction by electromagnetic interaction between the currents of the coils and the magnetic field of the field part 10.

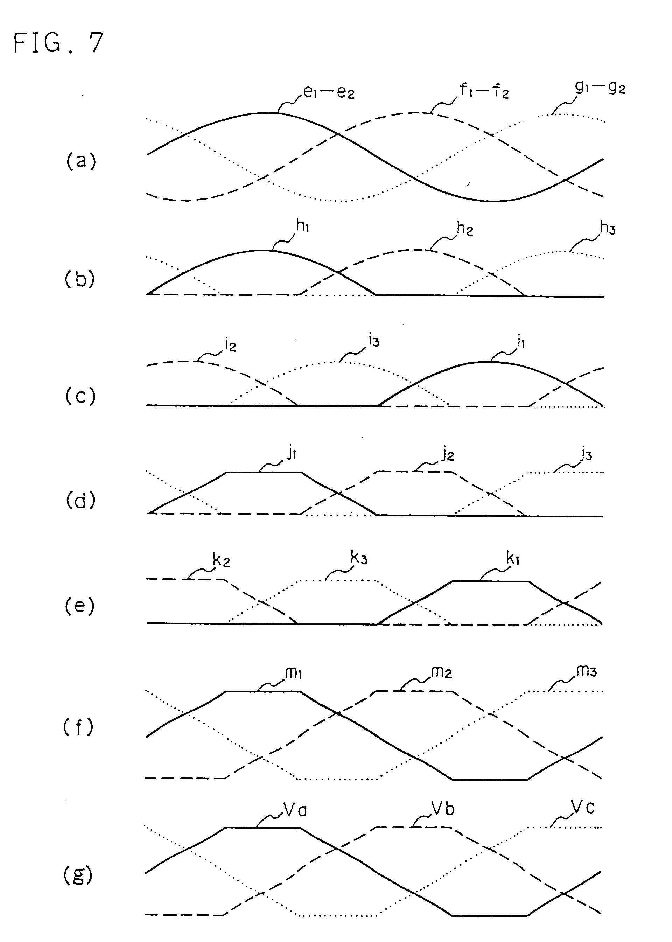

FIG. 7 is a waveform chart illustrating the operation of the embodiment. As the rotational movement (or a relative movement with respect to the three-phase coils) of the field part 10 proceeds, the position detecting elements 130A, 130B, and 130C which detects the magnetic field of the field part 10 produce sinusoidal detection signals e1-e2, f1-f2, and g1-g2 (see (a) of FIG. 7 wherein the horizontal axis indicates the rotational position). The altering signal producing circuit 22 produces the three-phase altering signals h1, h2, and h3 (the currents supplied to the first diodes, (b) of FIG. 7), and i1, i2, and i3 (the currents supplied to the second diodes, (c) of FIG. 7) which analoguely vary in correspondence with the detection signals. In the first distributing circuit 31, the first output current signal d1 is distributed by the first distributing transistors 185, 186, and 187 in correspondence with the values of the altering signals h1, h2, and h3 (the values of the currents supplied to the first diodes 180, 181, and 182), thereby obtaining the three-phase first distributed current signals j1, j2, and j3 ((d) of FIG. 7). The first distributed current signals j1, j2, and j3 are three-phase current signals which vary in correspondence with the results h1·d1, h2·d1, and h3·d1 of multiplications of the altering signals h1, h2, and h3 by the first output current signal d1, respectively, and which are distributed in such a manner that a sum of the results h1·d1+h2·d1+h3·d1 is equal to the first output current signal d1. Similarly, in the second distributing circuit 32, the second output current signal d2 is distributed by the second distributing transistors 205, 206, and 207 in correspondence with the values of the altering signals i1, i2, and i3 (the values of the currents supplied to the second diodes 200, 201, and 202), thereby obtaining the three-phase second distributed current signals k1, k2, and k3 ((e) of FIG. 7). The second distributed current signals k1, k2, and k3 are three-phase current signals which vary in correspondence with the results i1·d2, i2·d2, and i3·d2 of multiplications of the altering signals i1, i2, and i3 by the second output current signal d2, respectively, and which are distributed in such a manner that a sum of the results i1·d2+i2·d2+i3·d2 is equal to the second output current signal d2. The distributing composer 33 composes the first distributed current signals j1, j2, and j3 and the second distributed current signals k1, k2, and k3, and obtains the three-phase distributed signals m1, m2, and m3 ((f) of FIG. 7). The distributed signals m1, m2, and m3 vary in correspondence with differential currents j1-k1, j2-k2, and j3-k3 between the first and second distributed current signals for each phase. The first driving circuit 41, the second driving circuit 42, and the third driving circuit 43 of the driving block 14 supplies the driving signals Va, Vb, and Vc ((g) of FIG. 7) which are respectively obtained by amplifying the distributed signals m1, m2, and m3, to the three-phase coils 11A, 11B, and 11C.

In the thus configured embodiment, even when the altering signals h1, h2, h3, i1, i2, and i3 corresponding to the detection signals of the position detector 21 are large or small in amplitude, the first and second distributed signals of the first and second distributing circuit 31 and 32 are surely limited to amplitudes corresponding to the first and second output current signal d1 and d2 of the command block 15. Therefore, the distributed signals m1, m2, and m3 (or the driving signals Va, Vb, and Vc) are not affected by the amplitudes of the detection signals and the altering signals. In other words, the signals are free from influences due to variation in the sensitivities of the position detecting elements 130A, 130B, and 130C of the position detector 21, variation in the magnetic field of the field part 10, and variation in the gains of the altering signal producing circuit 22. Therefore, when the brushless motor of the embodiment is used to a speed control or a torque control, variation in speed control gains or torque control gains in mass production is reduced, and hence the control properties of motors in mass production are extremely unified (control instability due to variation in the gains of motors does not occur).

In the embodiment, even when the detection signals of the position detector vary analoguely sinusoidally, the distributed signals and the driving signals are distorted into a trapezoidal shape. In many uses, such distortion is allowable. In order to realize higher performance, however, it is preferable to eliminate such distortion. Next, an embodiment which is improved in this point will be described.

### EMBODIMENT 2

Hereinafter, a second embodiment of the invention will be described with reference to the accompanying drawings.

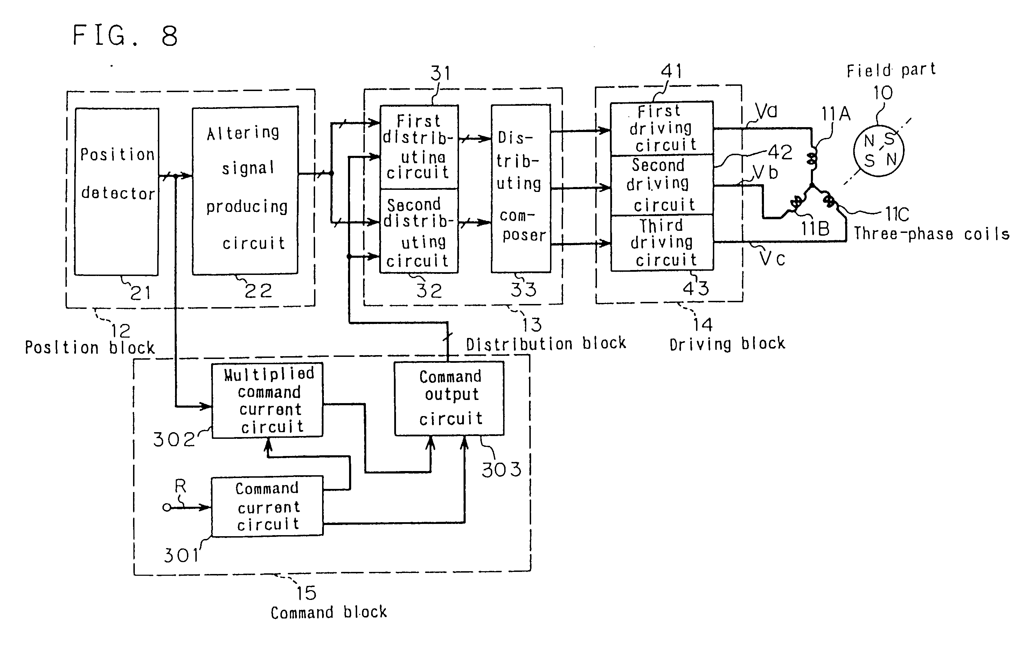

Figs. 8 to 11 show a brushless motor of the second embodiment of the invention. FIG. 8 shows the whole configuration of the motor.

In the circuit block diagrams, a connection line to or from circuit block with oblique short bar crossing therewith represents plural connection lines or a connection line for aggregate signals.

In the embodiment, a command block 15 comprises a command current circuit 301, a multiplied command current circuit 302, and a command output circuit 303, and produces distributed signals and driving signals which vary analoguely. The components which are identical with those of the first embodiment are designated by the same reference numerals.

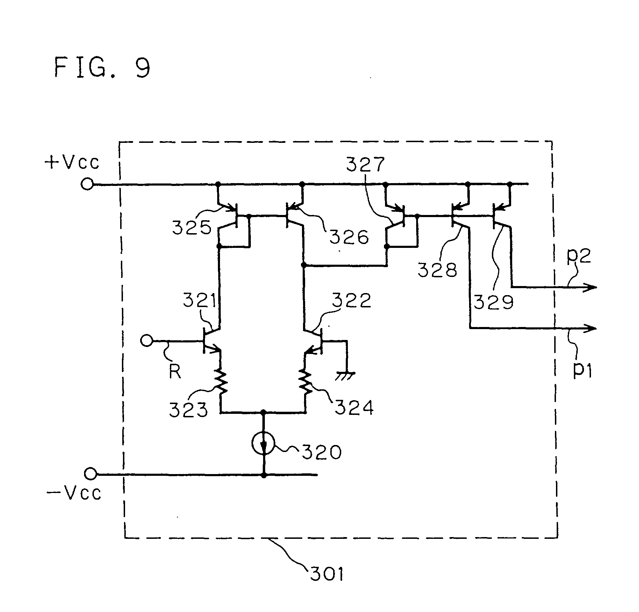

FIG. 9 specifically shows the configuration of the command current circuit 301 of the command block 15. In correspondence with the command signal R, transistors 321 and 322, and resistors 323 and 324 distribute the current of a constant current source 320 to the collectors of the transistors 321 and 322. The collector currents are compared with each other by a current mirror circuit consisting of transistors 325 and 326, and the difference current is output as command current signals p1 and p2 through a current mirror circuit consisting of transistors 327, 328, and 329. Therefore, the command current circuit 301 produces two command current signals p1 and p2 (p1 and p2 are proportional to each other) corresponding to the command signal R. The first command current signal p1 is supplied to the command output circuit 303, and the second command current signal p2 to the multiplied command current circuit 302.

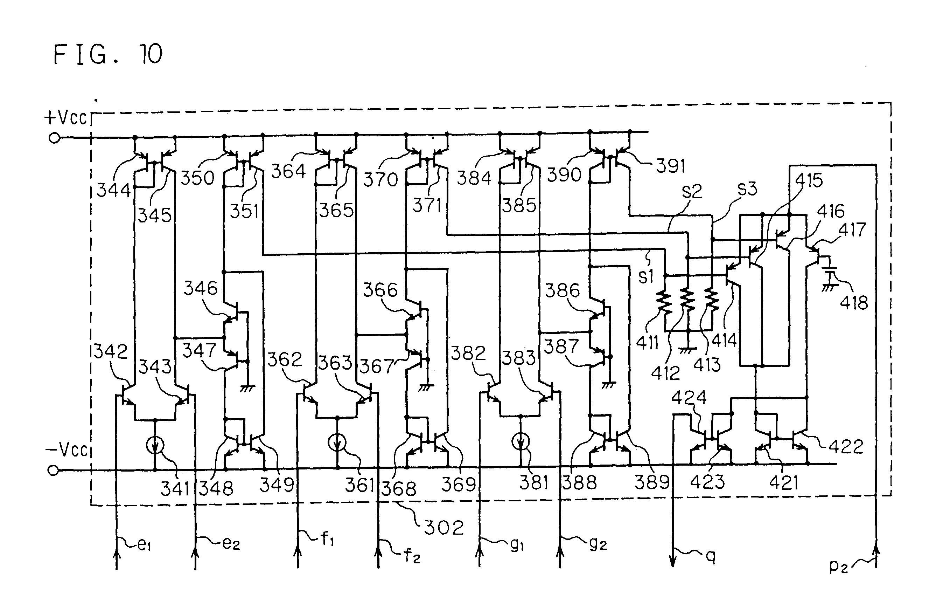

FIG. 10 specifically shows the configuration of the multiplied command current circuit 302 of the command block 15. In correspondence with the detection signals e1 and e2, transistors 342 and 343 distribute the value of the current of a constant current source 341 to the collectors. The difference current is obtained by a current mirror circuit consisting of transistors 344 and 345, and a voltage signal s1 corresponding to the absolute value of the difference current is obtained by transistors 346, 347, 348, 349, 350, and 351, and a resistor 411. In other words, the voltage signal s1 corresponding to the absolute value of a detection signal e1 - e2 is produced. Similarly, a voltage signal s2 corresponding to the absolute value of a detection signal f1 - f2 is produced at a resistor 412, and a voltage signal s3 corresponding to the absolute value of a detection signal g1 - g2 is produced at a resistor 413. In other words, the voltage signals s1, s2, and s3 at the resistors 411, 412, and 413 are absolute signals of the three-phase detection signals e1 - e2, f1 - f2, and g1 - g2. Transistors 414, 415, 416, and 417 compares the voltage signals s1, s2, and s3 with a predetermined voltage value (including 0 V) of a constant voltage source 418. In correspondence with the difference voltages, the command current signal p2 is distributed to the collectors of the transistors. The collector currents of the transistors 414, 415, and 416 are composed together. A current mirror circuit consisting of transistors 421 and 422 compares the composed current with the collector current of the transistor 417, and the resultant difference current is output as a multiplied command current signal q (inflow current) via a current mirror circuit consisting of transistors 423 and 424. The multiplied command current signal q varies responding with results of multiplications of the voltage signals s1, s2, and s3 corresponding to the detections signals by the command current signal p2 corresponding to the command signal. Particularly, because of the configuration of the transistors 414, 415, 416, and 417, the multiplied command current signal q varies responding with a result of multiplication between the minimum value of the voltage signals s1, s2, and s3 (three-phase absolute signals) and the command current signal p2. The minimum value of the voltage signals s1, s2, and s3 (three-phase absolute signals) corresponding to the absolute values of the detection signals is a higher harmonic signal which is synchronized with the detection signals and which varies 6 times for a change of every one period of the detection signals. Therefore, the multiplied command current signal q is a higher harmonic signal which has an amplitude proportional to the command current signal p2 and which varies 6 times every one period of the detection signals.

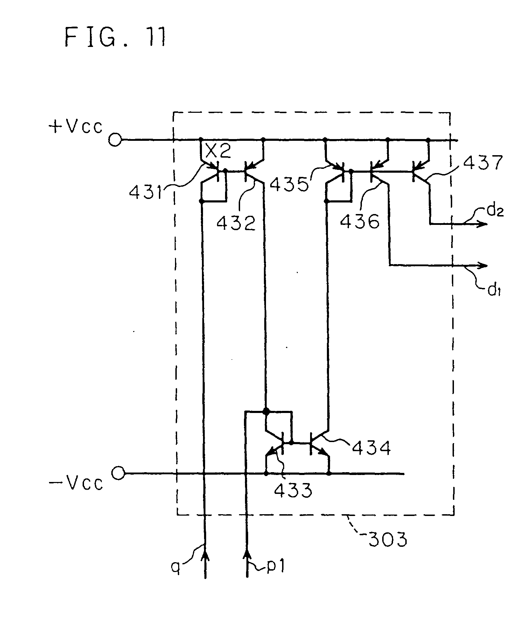

FIG. 11 specifically shows the configuration of the command output circuit 303 of the command block 15. The multiplied command current signal q of the multiplied command output circuit 302 is input to a current mirror circuit consisting of transistors 431 and 432 and reduced in current value to approximately one half. Thereafter, the signal and the first command current signal p1 of the command current circuit 301 are composed together by addition. The composed command current signal is output as the two output current signals d1 and d2 via a current mirror circuit consisting of transistors 433 and 434, and that of transistors 435, 436, and 437. As a result, the first and second output current signals d1 and d2 of the command block 15 become output current signals which vary in correspondence with the command signal and which contain the higher harmonic signal component at a predetermined percentage. The first output current signal d1 is supplied to the first distributing circuit 31 of the distribution block 13, and the second output current signal d2 to the second distributing circuit 32.

The specific configurations and operations of the position block 12 (the position detector 21 and the altering signal producing circuit 22), the distribution block 13 (the first distributing circuit 31, the second distributing circuit 32, and the distributing composer 33), and the driving block 14 (the first driving circuit 41, the second driving circuit 42, and the third driving circuit 43) are the same as those shown in Figs. 4, 5, and 6. Therefore, their detailed description is omitted.

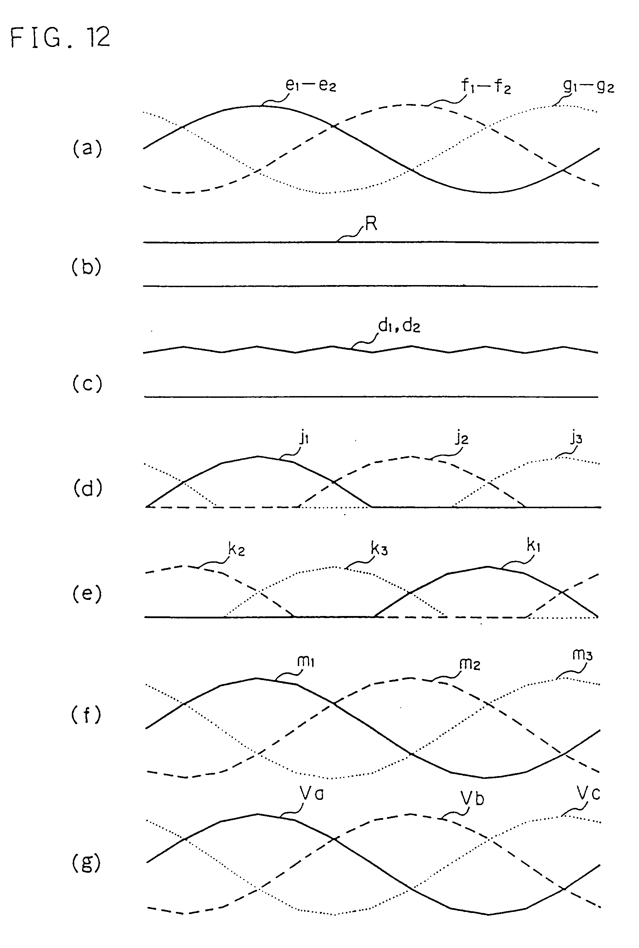

FIG. 12 is a waveform chart of the embodiment. As the rotational movement (or a relative movement with respect to the three-phase coils) of the field part 10 proceeds, the position detecting elements 130A, 130B, and 130C which detect the magnetic field of the field part 10 produce sinusoidal detection signals e1 - e2, f1 - f2, and g1 - g2 (see (a) of FIG. 12 wherein the horizontal axis indicates the rotational position). In response to the command signal R of a predetermined value ((b) of FIG. 12), the multiplied command current circuit 302 and the command output circuit 303 of the command block 15 produce the first and second output current signals d1 and d2 of the command block 15, each of which contains the higher harmonic signal component at a predetermined percentage in correspondence with the detection signals ((c) of FIG. 12). The altering signal producing circuit 22 produces the three-phase altering signals h1, h2, and h3, and i1, i2, and i3 which analoguely vary in correspondence with the detection signals. In the first distributing circuit 31, the first output current signal d1 of the command block 15 is distributed by the first distributing transistors 185, 186, and 187 in correspondence with the values of the altering signals h1, h2, and h3 (the values of the currents supplied to the first diodes 180, 181, and 182), thereby obtaining the three-phase first distributed current signals j1, j2, and j3 ((d) of FIG. 12). The first distributed current signals j1, j2, and j3 are current signals which vary in correspondence with the results h1·d1, h2·d1, and h3·d1 of multiplications of the altering signals h1, h2, and h3 by the first output current signal d1, respectively, and which are distributed in such a manner that a sum of the results h1·d1+h2·d1+h3·d1 is equal to the first output current signal d1. Similarly, in the second distributing circuit 32, the second output current signal d2 of the command block 15 is distributed by the second distributing transistors 205, 206, and 207 in correspondence with the values of the altering signals i1, i2, and i3 (the values of the currents supplied to the second diodes 200, 201, and 202), thereby obtaining the three-phase second distributed current signals k1, k2, and k3 ((e) of FIG. 12). The second distributed current signals k1, k2, and k3 are current signals which vary in correspondence with the results i1·d2, i2·d2, and i3·d2 of multiplications of the altering signals i1, i2, and i3 by the second output current signal d2, respectively, and which are distributed in such a manner that a sum of the results i1·d2+i2·d2+i3·d2 is equal to the second output current signal d2. The distributing composer 33 composes the first distributed current signals j1, j2, and j3 and the second distributed current signals k1, k2, and k3 together, thereby obtaining the three-phase distributed signals m1, m2, and m3 ((f) of FIG. 12). The distributed signals m1, m2, and m3 vary in correspondence with differential currents j1 - k1, j2 - k2, and j3 - k3 between the first and second distributed current signals for each phase. The first driving circuit 41, the second driving circuit 42, and the third driving circuit 43 of the driving block 14 supply the driving signals Va, Vb, and Vc ((g) of FIG. 12) which are respectively obtained by amplifying the distributed signals m1, m2, and m3, to the three-phase coils 11A, 11B, and 11C.

In the thus configured embodiment, the distributed signals m1, m2, and m3 (or the driving signals Va, Vb, and Vc) are not affected by variation in the sensitivities of the position detecting elements 130A, 130B, and 130C of the position detector 21, variation in the magnetic field of the field part 10, and variation in the gain of the altering signal producing circuit 22, and have amplitudes corresponding to the command signal.

When, in the command block, the output current signals which are proportional to the command signal and which contain the higher harmonic signal component at a predetermined percentage in accordance with the detection signals are produced, and the distributed signals which vary in correspondence with results of multiplications of the output currents by the altering signal (signals corresponding to the detection signals) are produced, then the distributed signals m1, m2, and m3 (or the driving signals Va, Vb, and Vc) can be formed as three-phase sinusoidal signals analoguely varying in correspondence with the detection signals. Therefore, distortions of the distributed signals and the driving signals are reduced to a very low level, and a uniform torque is generated, so that the motor is smoothly driven.

When the command current circuit produces two command current signals corresponding to the command signal, the multiplied command current circuit produces the multiplied command current signal which is obtained by multiplying one of the command current signals with the higher harmonic signal produced by the detection signals, and the command output circuit produces the output current signals by composing the other command current signal and the multiplied command current signal, variation in amplitude of the multiplied command current signal can be reduced even when the detection signals vary in amplitude. Because the transistors 414, 415, and 416 in the multiplied command current circuit are nonlinearly operated. So, variation in the percentages of the higher harmonic signal component contained in the output current signals d1 and d2 of the command block can be reduced. In other words, the motor is very resistant to variation in the sensitivities of the position detecting elements and variation in the magnetic field of the field part. When the motor is configured so as to obtain three-phase absolute signals corresponding to the detection signals and a higher harmonic signal corresponding to a minimum value of the three-phase absolute signals, a higher harmonic signal which is synchronized with the detection signals and which varies 6 times for a change of every one period can be accurately produced by a simple configuration.

### EMBODIMENT 3

Hereinafter, a third embodiment of the invention will be described with reference to the accompanying drawings.

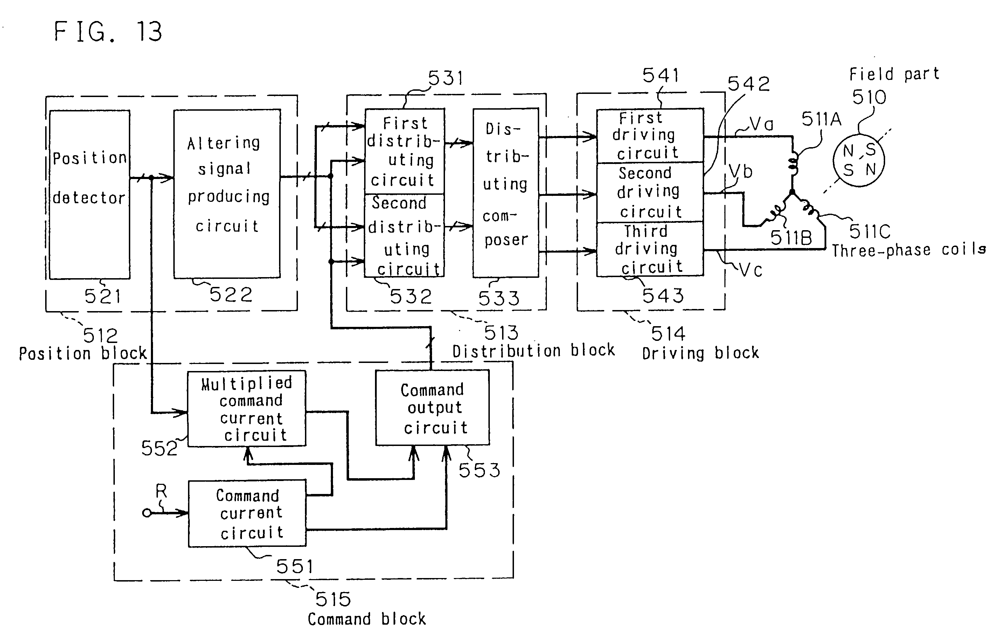

Figs. 13 to 21 show the third embodiment of the brushless motor of the invention.

In the circuit block diagrams, a connection line to or from circuit block with oblique short bar crossing therewith represents plural connection lines or a connection line for aggregate signals.

In the embodiment, the positional relationships between coils and position detecting elements are shifted from each other by an electric angle of about 30 deg., additionally. So, the detecting elements are positioned between the coils, thereby facilitating the production of the motor. Since the position detecting elements and the coils are arranged with separating their phase relationships from each other by about 30 deg. in electric angle, driving signals which are shifted by 30 deg. as seen from the detection signals of the position detecting elements are applied to the coils, respectively.

FIG. 13 shows the whole configuration of the motor. A field part 510 shown in FIG. 13 is mounted on the rotor or a movable body and forms plural magnetic field poles by a permanent magnet, thereby generating field magnetic fluxes. Three-phase coils 511A, 511B, and 511C are mounted on the stator or a stationary body and arranged so as to be electrically separated from each other by a predetermined angle (corresponding to 120 deg.) with respect to intercrossing with the magnetic fluxes generated by the field part 510.

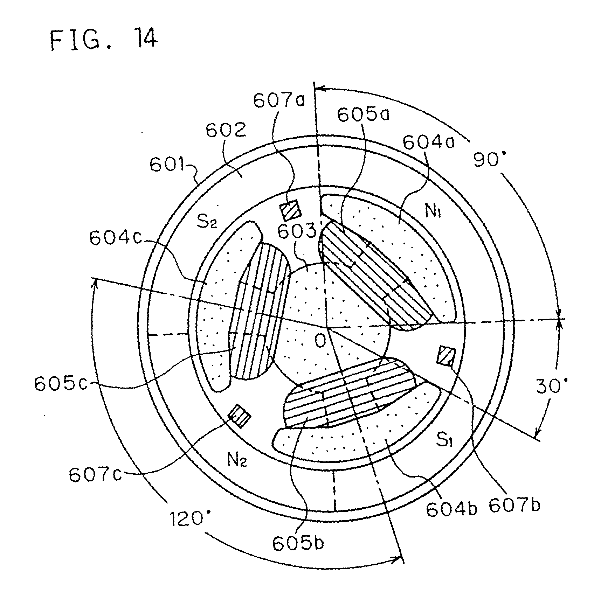

FIG. 14 specifically shows the configuration of the field part 510 and the three-phase coils 511A, 511B, and 511C. In an annular permanent magnet 602 attached to the inner side of the rotor 601, the inner and end faces are magnetized so as to form four poles, thereby constituting the field part 510 shown in FIG. 13. An armature core 603 is placed at a position of the stator which opposes the poles of the permanent magnet 602. Three salient poles 604a, 604b, and 604c are disposed in the armature core 603 at intervals of 120 deg. Three-phase coils 605a, 605b, and 605c (corresponding to the three-phase coils 511A, 511B, and 511C shown in FIG. 13) are wound on the salient poles 604a, 604b, and 604c, respectively. Among the coils 605a, 605b, and 605c, phase differences of 120 deg. in electric angle are established with respect to intercrossing magnetic fluxes from the permanent magnet 602 (one set of N and S poles corresponds to an electric angle of 360 deg.). Three position detecting elements 607a, 607b, and 607c (for example, Hall elements which are magnetoelectrical converting elements) are arranged on the stator and detect the poles of the permanent magnet 602, thereby obtaining three-phase detection signals corresponding to relative positions of the field part and the coils. In the embodiment, the center of the coils and that of the position detecting elements are shifted in phase by an electric angle of 120 deg. According to this configuration, the position detecting elements can be disposed in winding slots of the armature core so as to detect the magnetic field of the inner face portion of the permanent magnet, whereby the motor structure can be miniaturized.

A command block 515 shown in FIG. 13 comprises a command current circuit 551, a multiplied command current circuit 552, and a command output circuit 553, and produces output current signals which contain a higher harmonic signal component at a predetermined percentage in correspondence with the detection signals.

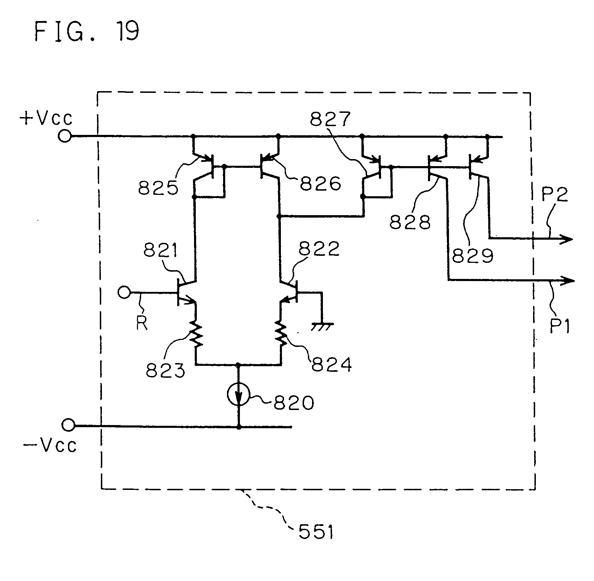

FIG. 19 specifically shows the configuration of the command current circuit 551 of the command block 515. In correspondence with a command signal R, transistors 821 and 822, and resistors 823 and 824 distribute the value of the current of a constant current source 820 to the collectors of the transistors 821 and 822. The collector currents are compared with each other by a current mirror circuit consisting of transistors 825 and 826, and the difference current is output as command current signals P1 and P2 through a current mirror circuit consisting of transistors 827, 828, and 829. Therefore, the command current circuit 551 produces the two command current signals P1 and P2 (P1 and P2 are proportional to each other) corresponding to the command signal R. The first command current signal P1 is supplied to the command output circuit 553, and the second command current signal P2 to the multiplied command current circuit 552.

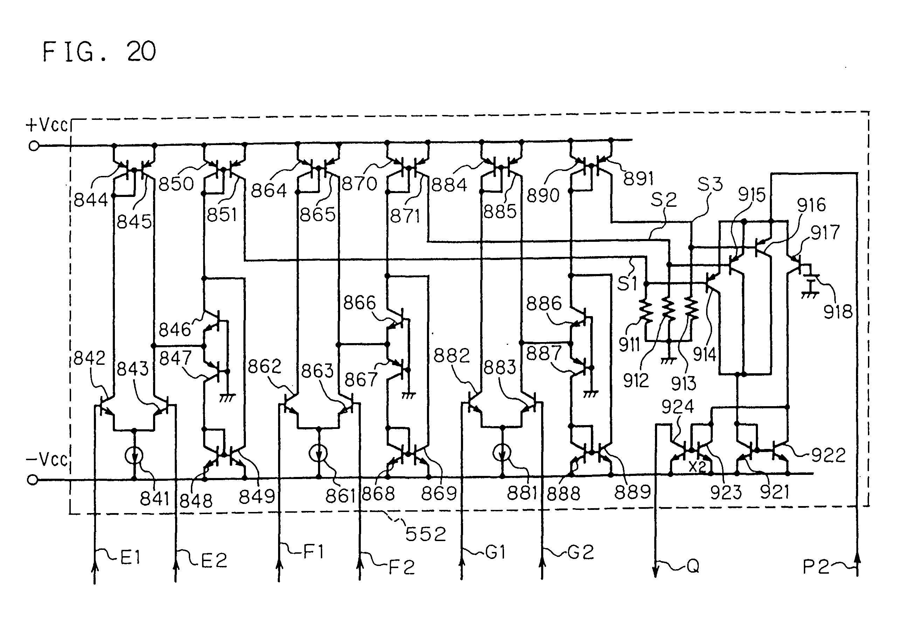

FIG. 20 specifically shows the configuration of the multiplied command current circuit 552 of the command block 515. In correspondence with detection signals E1 and E2 of the position detecting elements, transistors 842 and 843 distribute the value of the current of a constant current source 841 to the collectors. The difference current is obtained by a current mirror circuit consisting of transistors 844 and 845, and a voltage signal S1 corresponding to the absolute value of the difference current is obtained by transistors 846, 847, 848, 849, 850, and 851, and a resistor 911. In other words, the voltage signal S1 corresponding to the absolute value of a detection signal E1 - E2 is produced. Similarly, a voltage signal S2 corresponding to the absolute value of a detection signal F1 - F2 is produced at a resistor 912, and a voltage signal S3 corresponding to the absolute value of a detection signal G1 - G2 is produced at a resistor 913. In other words, the voltage signals S1, S2, and S3 at the resistors 911, 912, and 913 are three-phase absolute signals of the detection signals E1 - E2, F1 - F2, and G1 - G2. Transistors 914, 915, 916, and 917 compare the three-phase absolute signals S1, S2, and S3 with a predetermined voltage value (including 0 V) of a constant voltage source 918. In correspondence with the difference voltages, the command current signal P2 is distributed to the collectors of the transistors. The collector currents of the transistors 914, 915, and 916 are composed together. A current mirror circuit consisting of transistors 921 and 922 compares the composed current with the collector current of the transistor 917. The difference current is input to a current mirror circuit consisting of transistors 923 and 924 and reduced in current value to approximately one half. The reduced current is output as a multiplied command current signal Q (inflow current). The multiplied command current signal Q varies responding with results of multiplications of the voltage signals S1, S2, and S3 corresponding to the detection signals by the command current signal P2 corresponding to the command signal R. Particularly, because of the configuration of the transistors 914, 915, 916, and 917, the multiplied command current signal Q varies responding with a result of a multiplication of the minimum value of the voltage signals S1, S2, and S3 (three-phase absolute signals) by the command current signal P2. The minimum value of the voltage signals S1, S2, and S3 (three-phase absolute signals) corresponding to the absolute values of the detection signals is a higher harmonic signal which is synchronized with the detection signals and which varies 6 times for a change of every one period of the detection signals. Therefore, the multiplied command current signal Q is a higher harmonic signal which has an amplitude proportional to the command current signal P2 and which varies 6 times every one period of the detection signals.

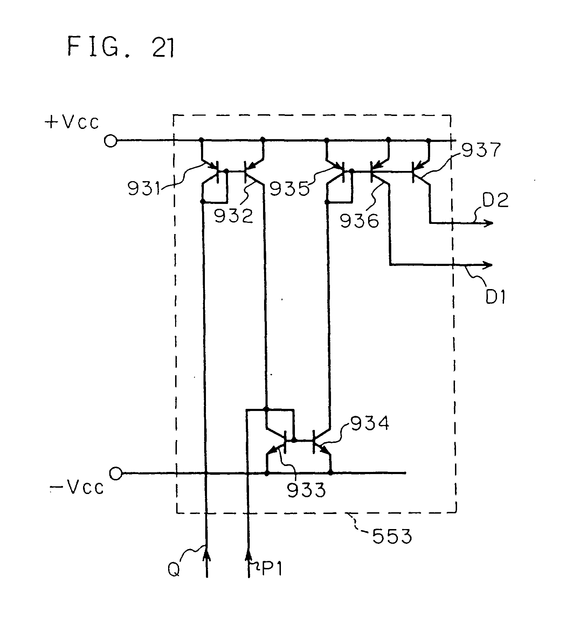

FIG. 21 specifically shows the configuration of the command output circuit 553 of the command block 515. The multiplied command current signal Q of the multiplied command output circuit 552 is input to a current mirror circuit consisting of transistors 931 and 932 and inverted in current direction. Thereafter, the signal and the first command current signal P1 of the command current circuit 551 are composed together by addition. The composed command current signal is output as two output current signals D1 and D2 via a current mirror circuit consisting of transistors 933 and 934, and that of transistors 935, 936, and 937. As a result, the first and second output current signals D1 and D2 of the command block 515 become current signals which vary in correspondence with the command signal and which contain the higher harmonic signal component at a predetermined percentage. The first output current signal D1 is supplied to a first distributing circuit 531 of a distribution block 513, and the second output current signal D2 to a second distributing circuit 532.

A position block 512 shown in FIG. 13 comprises a position detector 521 and an altering signal producing circuit 522, produces altering signals from detection signals of position detecting elements of the position detector 521, and supplies the altering signals to the first and second distributing circuits 531 and 532 of the distribution block 513.

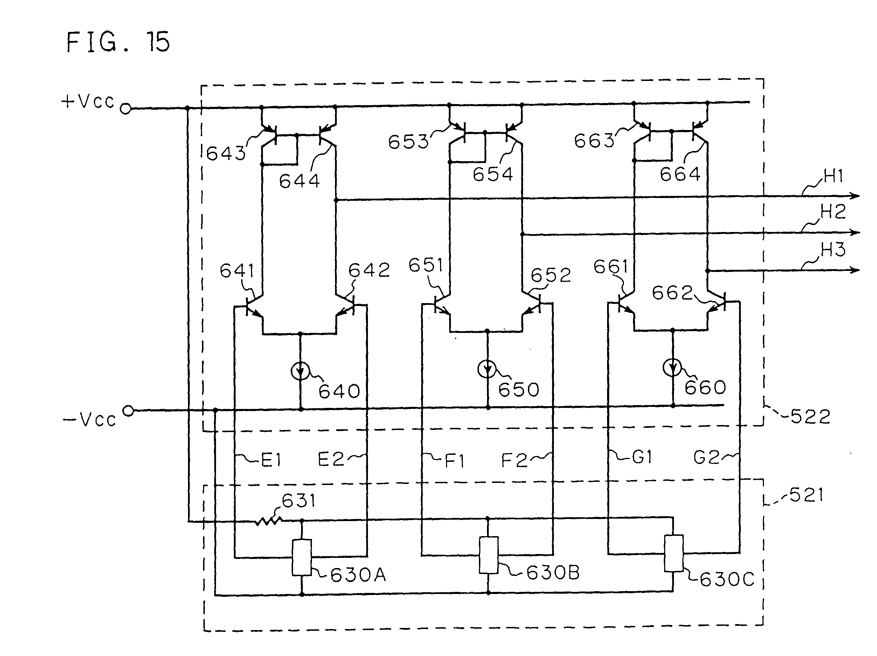

FIG. 15 specifically shows the configuration of the position detector 521 and the altering signal producing circuit 522. Position detecting elements 630A, 630B, and 630C of the position detector 521 correspond to the position detecting elements 607a, 607b, and 607c of FIG. 14. The voltage is applied in parallel to the position detecting elements via a resistor 631. The differential detection signals E1 and E2 corresponding to the detected magnetic field of the field part 510 (corresponding to the permanent magnet 602 of FIG. 14) are output from output terminals of the position detecting element 630A (E1 and E2 vary in reversed phase relationships) and then supplied to the bases of differential transistors 641 and 642 of the altering signal producing circuit 522. Differential detection signals F1 and F2 corresponding to the detected magnetic field are output from output terminals of the position detecting element 630B and then supplied to the bases of differential transistors 651 and 652 of the altering signal producing circuit 522. Differential detection signals G1 and G2 corresponding to the detected magnetic field are output from output terminals of the position detecting element 630C and then supplied to the bases of differential transistors 661 and 662 of the altering signal producing circuit 522. As the rotational movement of the field part 510 proceeds, the detection signals E1, F1, and G1 (and E2, F2, and G2) analoguely vary so as to function as three-phase signals which are electrically separated in phase from each other by 120 deg.

Constant current sources 640, 650, and 660 of the altering signal producing circuit 522 supply a current of the same constant value. In correspondence with the detection signals E1 and E2, the differential transistors 641 and 642 distribute the value of the current of the constant current source 640 to the collectors. The collector currents of the transistors 641 and 642 are compared with each other by a current mirror circuit consisting of transistors 643 and 644, and the difference current is output as an altering signal H1. Similarly, in correspondence with the detection signals F1 and F2, the differential transistors 651 and 652 distribute the value of the current of the constant current source 650 to the collectors. The collector currents of the transistors 651 and 652 are compared with each other by a current mirror circuit consisting of transistors 653 and 654, and the difference current is output as an altering signal H2. Furthermore, in correspondence with the detection signals G1 and G2, the differential transistors 661 and 662 distribute the value of the current of the constant current source 660 to the collectors. The collector currents of the transistors 661 and 662 are compared with each other by a current mirror circuit consisting of transistors 663 and 664, and the difference current is output as an altering signal H3.

The altering signals H1, H2, and H3 are three-phase current signals (inflow/outflow signals) which analoguely vary in correspondence with the detection signals, and supplied to the first and second distributing circuits 531 and 532.

The first distributing circuit 531 of the distribution block 513 of FIG. 13 obtains three-phase first distributed current signals to which the first output current signal D1 is distributed in correspondence with the altering signals H1, H2, and H3 of the altering signal producing circuit 522. The second distributing circuit 532 obtains three-phase second distributed current signals to which the second output current signal D2 is distributed in correspondence with the altering signals H1, H2, and H3 of the altering signal producing circuit 522. A distributing composer 533 composes the first and second distributed current signals together into three-phase distributed signals, and supplies the distributed signals to a driving block 514.

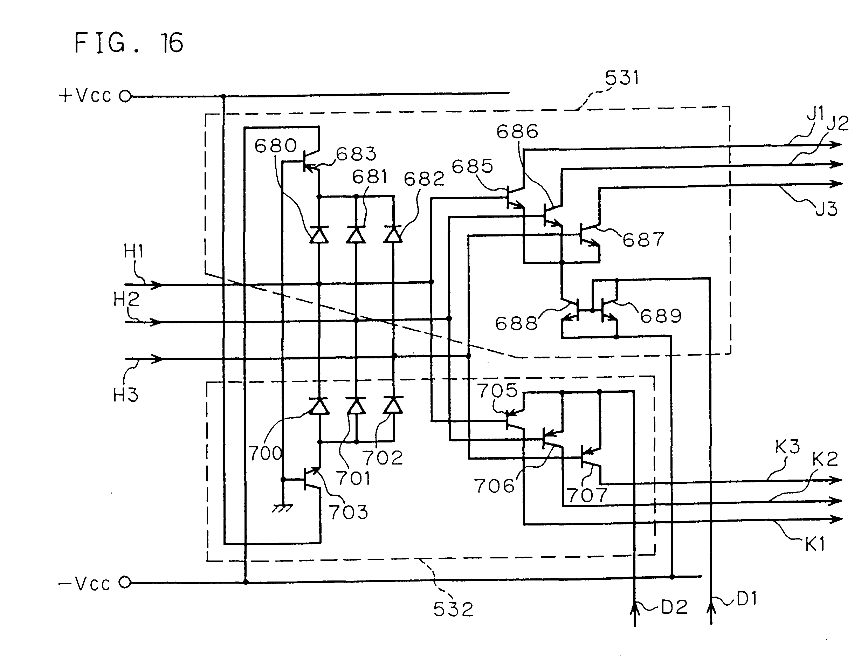

FIG. 16 specifically shows the configuration of the first and second distributing circuits 531 and 532 of the distribution block 513. The inflow currents of the altering signals H1, H2, and H3 flow into first diodes 680, 681, and 682 of the first distributing circuit 531, so that voltage signals corresponding to the inflow current values of the signals H1, H2, and H3 are generated at the terminals of the first diodes 680, 681, and 682. In the first diodes 680, 681, and 682, the ends of one side are connected to each other and the other ends are connected to the bases of first distributing transistors 685, 686, and 687, respectively. A transistor 683 supplies a bias of a predetermined voltage to the first diodes. The first output current signal D1 of the command block 515 is supplied via a current mirror circuit consisting of transistors 688 and 689, to the emitters of the first distributing transistors 685, 686, and 687 which are connected to each other. In correspondence with the values of the altering signals H1, H2, and H3 which flow into the first diodes 680, 681, and 682, therefore, the first distributing transistors 685, 686, and 687 distribute the first output current signal D1 so as to generate three-phase first distributed current signals J1, J2, and J3 (inflow currents) which analoguely vary.

The first distributed current signal J1 of the first distributing circuit 531 varies responding with a result H1P·D1 of a multiplication of the inflow current value H1P of the altering signal H1 (the inflow current to the first diode 680) by the first output current signal D1 (the current value) of the command block 515, the first distributed current signal J2 varies responding with a result H2P·D1 of a multiplication of the inflow current value H2P of the altering signal H2 by the first output current signal D1, and the first distributed current signal J3 varies responding with a result H3P·D1 of a multiplication of the inflow current value H3P of the altering signal H3 by the first output current signal D1 (the value of the composed current J1+J2+J3 of the first distributed current signals is equal to the first output current signal D1).

The outflow currents of the altering signals H1, H2, and H3 flow into second diodes 700, 701, and 702 of the second distributing circuit 532 so that voltage signals corresponding to the current values of the signals H1, H2, and H3 are generated at the terminals of the second diodes 700, 701, and 702. In the second diodes 700, 701, and 702, the ends of one side are connected to each other and the other ends (the current outflow side) are connected to the bases of second distributing transistors 705, 706, and 707, respectively. A transistor 703 supplies a bias of a predetermined voltage to the second diodes. The second output current signal D2 of the command block 515 is supplied to the emitters of the second distributing transistors 705, 706, and 707 which are connected to each other. In correspondence with the values of the currents of the altering signals H1, H2, and H3 which flow out into the second diodes 700, 701, and 702, therefore, the second distributing transistors 705, 706, and 707 distribute the second output current signal D2 so as to generate three-phase second distributed current signals K1, K2, and K3 (outflow currents) which analoguely vary.

The second distributed current signal K1 of the second distributing circuit 532 varies responding with a result H1N·D2 of a multiplication of the outflow current value H1N of the altering signal H1 (the outflow current from the second diode 700) and the second output current signal D2 (the current value) of the command block 515, the second distributed current signal K2 varies responding with a result H2N·D2 of a multiplication of the outflow current value H2N of the altering signal H2 and the second output current signal D2, and the second distributed current signal K3 varies responding with a result H3N·d2 of a multiplication of the outflow current value H3N of the altering signal H3 and the second output current signal D2 (the value of the composed current K1+K2+K3 of the second distributed current signals is equal to the second output current signal D2).

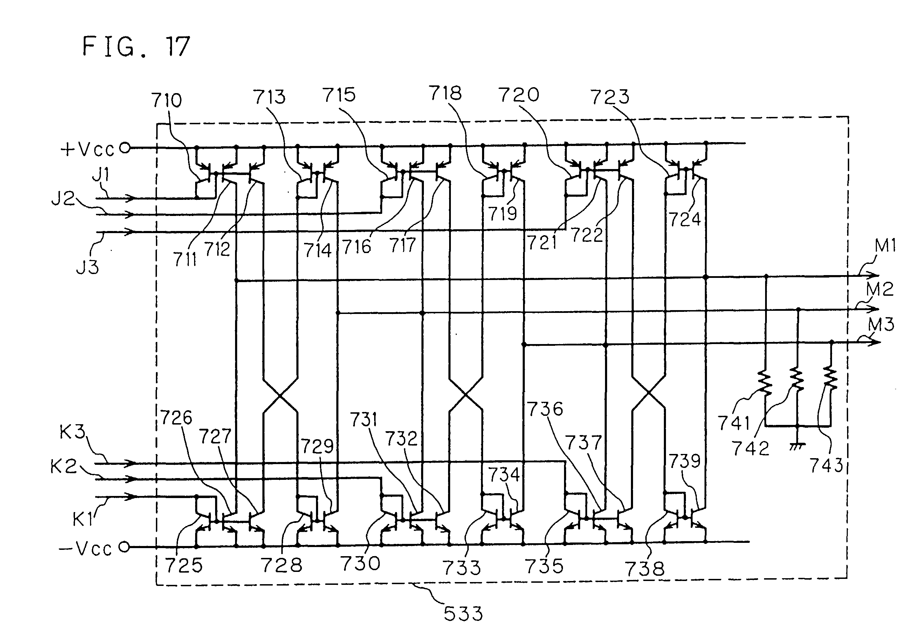

FIG. 17 specifically shows the configuration of the distributing composer 533 of the distribution block 513. The currents of the first distributed current signals J1, J2, and J3 are inverted by a current mirror circuit consisting of transistors 710, 711, and 712, that consisting of transistors 715, 716, and 717, and that consisting of transistors 720, 721, and 722, respectively. The currents of the second distributed current signals K1, K2, and K3 are inverted by a current mirror circuit consisting of transistors 725, 726, and 727, that consisting of transistors 730, 731, and 732, and that consisting of transistors 735, 736, and 737, respectively. For each phase, the output terminals of one side of the current mirror circuits are connected to each other so as to produce a difference current for the phase. The other output currents of these current mirror circuits are inverted by a current mirror circuit consisting of transistors 713 and 714, that consisting of transistors 718 and 719, that consisting of transistors 723 and 724, that consisting of transistors 728 and 729, that consisting of transistors 733 and 734, and that consisting of transistors 738 and 739, respectively. For each phase, the output terminals of the current mirror circuits are connected to each other so as to produce a difference current for the phase. A difference current (J1 - K1) between the currents J1 and K1, and a difference current (J3 - K3) between the currents J3 and K3 are composed together by addition so as to produce a composed distributed current signal. The composed distributed current signal is supplied to a resistor 741 so as to produce a distributed signal M1 at the terminals of the resistor 741. Similarly, a difference current (J2 - K2) between the currents J2 and K2, and the difference current (J1 - K1) between the currents J1 and K1 are composed together by addition so as to produce a composed distributed current signal. The composed distributed current signal is supplied to a resistor 742 so as to produce a distributed signal M2 at the terminals of the resistor 742. Furthermore, the difference current (J3 - K3) between the currents J3 and K3, and the difference current (J2 - K2) between the currents J2 and K2 are composed together by addition so as to produce a composed distributed current signal. The composed distributed current signal is supplied to a resistor 743 so as to produce a distributed signal M3 at the terminals of the resistor 743. In this way, the distributed signals M1, M2, and M3 are produced as three-phase voltage signals corresponding to the altering signals and have a predetermined amplitude which depends on the current values of the output current signals D1 and D2 of the command block 515 (the signals are not affected by the amplitudes of the altering signals).

The driving block 514 of FIG. 13 comprises a first driving circuit 541, a second driving circuit 542, and a third driving circuit 543, and supplies driving signals Va, Vb, and Vc, which are obtained by power-amplifying the distributed signals M1, M2, and M3 of the distribution block 513, to the terminals of the three-phase coils 511A, 511B, and 511C.

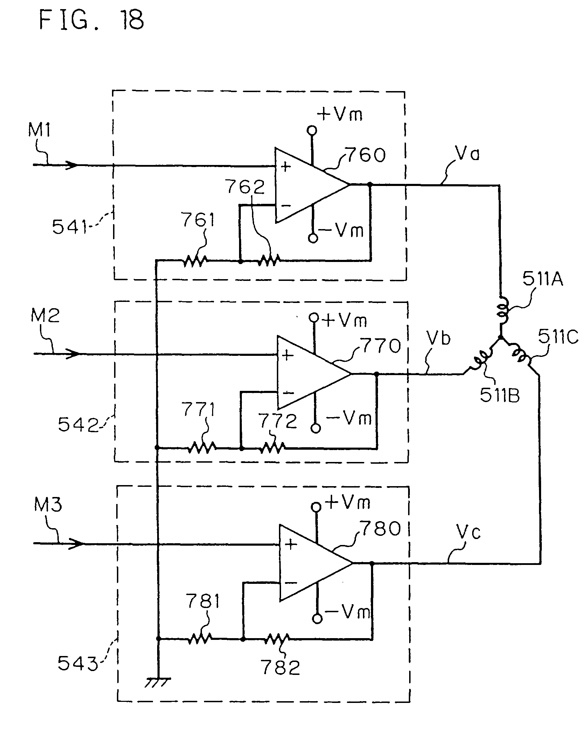

FIG. 18 specifically shows the configuration of the first driving circuit 541, the second driving circuit 542, and the third driving circuit 543 of the driving block 514. The distributed signal M1 is input to the noninverting terminal of an amplifier 760 of the first driving circuit 541 and then subjected to voltage amplification which depends on resistors 761 and 762, thereby producing the driving signal Va. The driving signal is supplied to the power input terminal of the coil 511A. Similarly, the distributed signal M2 is input to the noninverting terminal of an amplifier 770 of the second driving circuit 542 and then subjected to voltage amplification which depends on resistors 771 and 772, thereby producing the driving signal Vb. The driving signal is supplied to the power input terminal of the coil 511B. Furthermore, the distributed signal M3 is input to the noninverting terminal of an amplifier 780 of the third driving circuit 543 and then subjected to voltage amplification which depends on resistors 781 and 782, thereby producing the driving signal Vc. The driving signal is supplied to the power input terminal of the coil 511C. The amplifiers 760, 770, and 780 are supplied with power source voltages +Vm and -Vm (+Vm = 15 V, -Vm = -15 V).

As a result of the supply of the driving signals Va, Vb, and Vc, three-phase driving currents are supplied to the three-phase coils 511A, 511B, and 511C so that a driving force is generated in a predetermined direction by electromagnetic interaction between the currents of the coils and the magnetic fluxes of the field part 510.

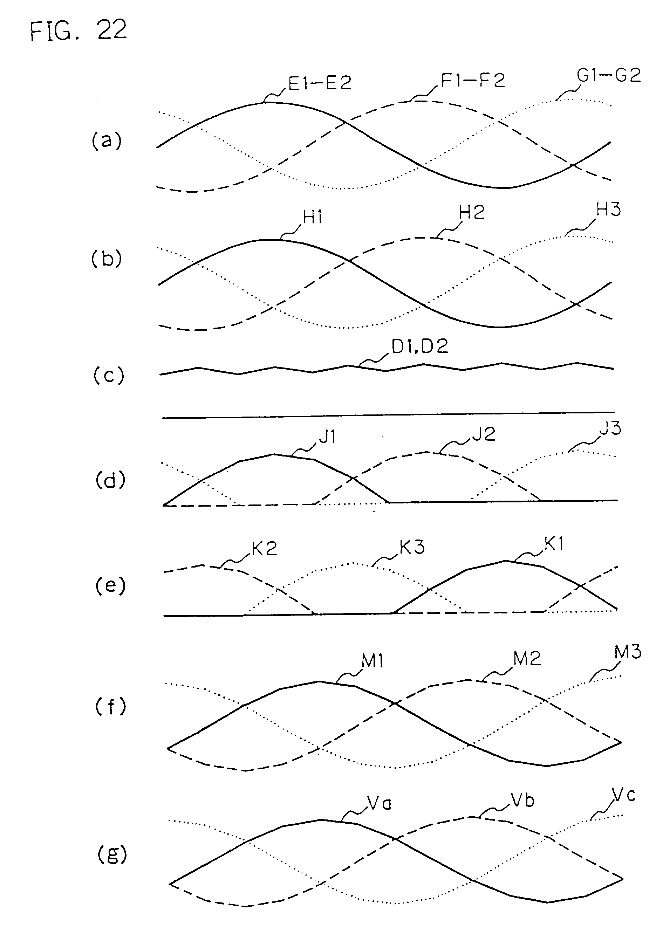

FIG. 22 is a waveform chart illustrating the operation of the embodiment. As the rotational movement (or a relative movement with respect to the three-phase coils) of the field part 510 proceeds, the position detecting elements 630A, 630B, and 630C which detect the magnetic field of the field part 510 produce sinusoidal detection signals E1-E2, F1-F2, and G1-G2 (see (a) of FIG. 22 wherein the horizontal axis indicates the rotational position). The altering signal producing circuit 522 produces the three-phase altering signals H1, H2, and H3 (outflow/inflow currents, (b) of FIG. 22) which analoguely vary in correspondence with the detection signals. In the first distributing circuit 531, the first output current signal D1 ((c) of FIG. 22) of the command block 515 is distributed by the first distributing transistors 685, 686, and 687 in correspondence with the values of the positive sides of the altering signals H1, H2, and H3 (the values of the currents flown into the first diodes 680, 681, and 682), thereby obtaining the three-phase first distributed current signals J1, J2, and J3 ((d) of FIG. 22). The first distributed current signals J1, J2, and J3 are current signals which vary in correspondence with the results H1P·D1, H2P·D1, and H3P·D1 of multiplications of signals H1P, H2P, and H3P of the positive sides of the altering signals H1, H2, and H3 by the first output current signal D1, respectively, and which are distributed in such a manner that a sum of the results H1P·D1+H2P·D1+H3P·D1 is equal to the first output current signal D1. Similarly, in the second distributing circuit 532, the second output current signal D2 of the command block 515 is distributed by the second distributing transistors 705, 706, and 707 in correspondence with the values of the negative sides of the altering signals H1, H2, and H3 (the values of the currents flown out from the second diodes 700, 701, and 702), thereby obtaining the three-phase second distributed current signals K1, K2, and K3 ((e) of FIG. 22). The second distributed current signals K1, K2, and K3 are current signals which vary in correspondence with the results H1N·D2, H2N·D2, and H3N·D2 of multiplications between signals H1N, H2N, and H3N of the negative sides of the altering signals H1, H2, and H3 and the second output current signal D2, respectively, and which are distributed in such a manner that a sum of the results H1N·D2+H2N·D2+H3N·D2 is equal to the second output current signal D2. The distributing composer 533 composes the first distributed current signals J1, J2, and J3 and the second distributed current signals K1, K2, and K3 together, thereby obtaining the three-phase distributed signals M1, M2, and M3 ((f) of FIG. 22). The distributed signals M1, M2, and M3 are produced by composing together two phases of J1 - K1, J2 - K2, and J3 - K3 between the first and second distributed current signals for each phase, respectively. Specifically, the distributed signal M1 is produced by composing (J1 - K1) and (K3 - J3), the distributed signal M2 by composing (J2 - K2) and (K1 - J1), and the distributed signal M3 by composing (J3 - K3) and (K2 - J2). The first driving circuit 541, the second driving circuit 542, and the third driving circuit 543 of the driving block 514 supply the driving signals Va, Vb, and Vc ((g) of FIG. 22), which are respectively obtained by amplifying the distributed signals M1, M2, and M3, to the three-phase coils 511A, 511B, and 511C.

In the thus configured embodiment, even when the altering signals H1, H2, and h3 corresponding to the detection signals of the position detector 521 are large or small in amplitude, the first and second distributed signals of the first and second distributing circuits 531 and 532 have amplitudes surely corresponding to the first and second output current signal D1 and D2 of the command block 515. Therefore, the distributed signals M1, M2, and M3 (or the driving signals Va, Vb, and Vc) are not affected by the amplitudes of the detection signals and the altering signals. In other words, the signals are free from influences due to variation in the sensitivities of the position detecting elements 630A, 630B, and 630C of the position detector 521, variation in the magnetic field of the field part 510, and variation in the gain of the altering signal producing circuit 522. When the brushless motor of the embodiment is used in speed control or a torque control, therefore, variation in speed control gains or torque control gains among motors are reduced remarkably and hence the control properties of motors in mass production are extremely stabilized (control instability due to variation in the gains of motors does not occur).

In the thus configured embodiment, furthermore, the distributed signals M1, M2, and M3 (or the driving signals Va, Vb, and Vc) vary analoguely sinusoidally in correspondence with the detection signals. Therefore, the distributed signals and the driving signals of a reduced distortion level can be obtained, and that a uniform torque is generated, so that the motor is smoothly driven.

In the thus configured embodiment, furthermore, as the position detecting elements are disposed between the salient poles of the armature core, the motor structure can be miniaturized.

### EMBODIMENT 4

Hereinafter, a fourth embodiment of the invention will be described with reference to the accompanying drawings.

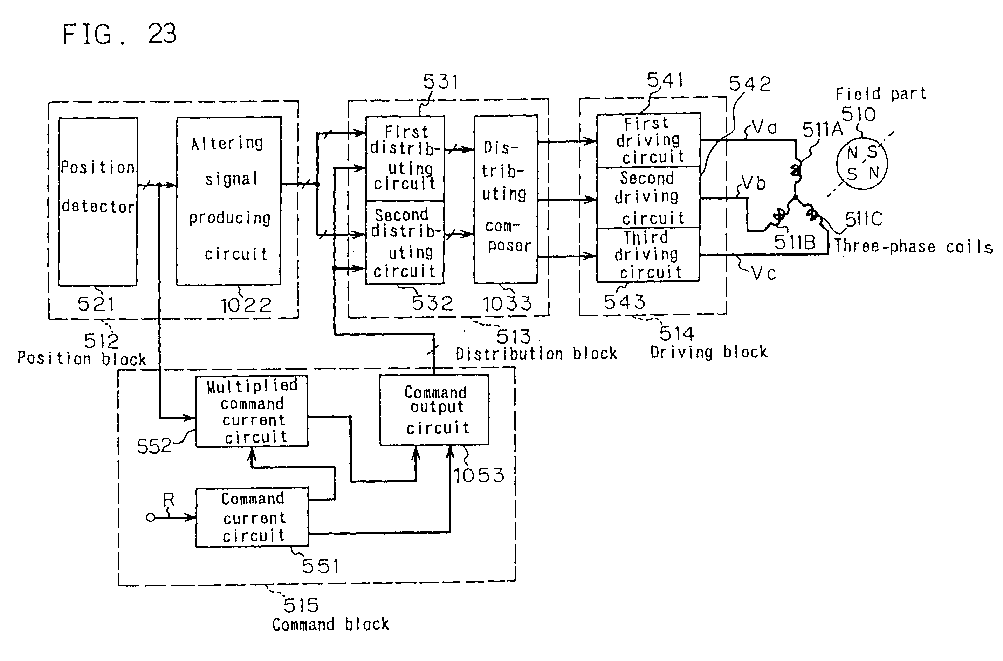

Figs. 23 to 26 show the fourth embodiment of the brushless motor of the invention.

In the circuit block diagrams, a connection line to or from circuit block with oblique short bar crossing therewith represents plural connection lines or a connection line for aggregate signals.

Also in the embodiment, the positional relationships between coils and attached positions of position detecting elements are shifted from each other by an electric angle of about 30 deg., additionally. the detecting elements are positioned between the coils, thereby facilitating the production of the motor.

FIG. 23 shows the whole configuration of the motor. In the embodiment, altering signals which are shifted by about 30 deg. in electric angle from the detection signals of the position detecting elements are produced by an altering signal producing circuit 1022, and a distributing composer 1033 of a distribution block 513 does not conduct the phase shifting operation. A command output circuit 1053 of a command block 515 is configured so as to compose command current signals and a multiplied command current signal together by subtraction. The components which are identical with those of the third embodiment are designated by the same reference numerals.

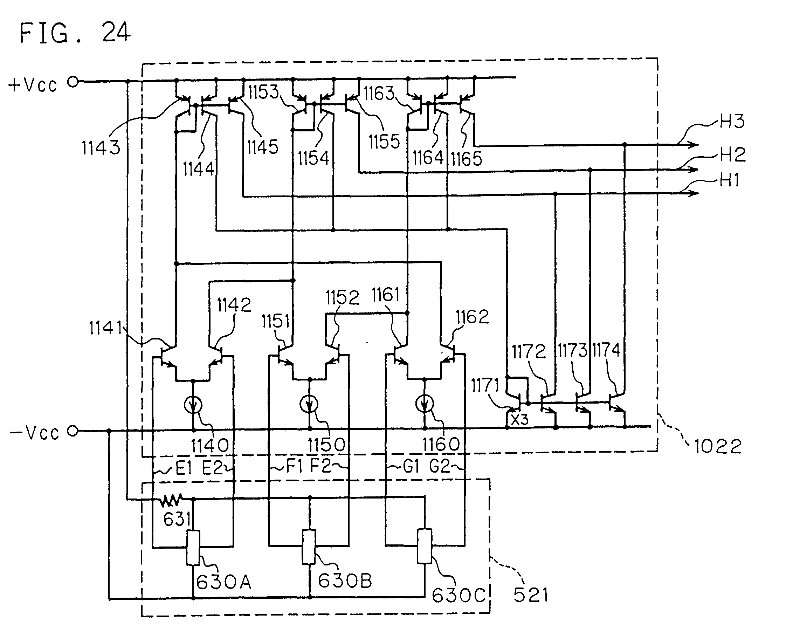

FIG. 24 specifically shows the configuration of the position detector 521 and the altering signal producing circuit 1022 of the position block 512. The position detecting elements 630A, 630B, and 630C of the position detector 521 correspond to the position detecting elements 607a, 607b, and 607c of FIG. 14. The voltage is applied in parallel to the position detecting elements via the resistor 631. The differential detection signals E1 and E2 corresponding to the detected magnetic field of the field part 510 (the permanent magnet 602 of FIG. 14) are output from the output terminals of the position detecting element 630A (E1 and E2 vary in reversed phase relationships) and then supplied to the bases of differential transistors 1141 and 1142 of the altering signal producing circuit 1022. Differential detection signals F1 and F2 corresponding to the detected magnetic field are output from the output terminals of the position detecting element 630B and then supplied to the bases of differential transistors 1151 and 1152. Differential detection signals G1 and G2 corresponding to the detected magnetic field are output from the output terminals of the position detecting element 630C and then supplied to the bases of differential transistors 1161 and 1162. As the rotational movement of the field part 510 proceeds, the detection signals E1, F1, and G1 (and E2, F2, and G2) analoguely vary so as to function as three-phase signals which are electrically separated in phase from each other by 120 deg.

Constant current sources 1140, 1150, and 1160 of the altering signal producing circuit 1022 supply a current of the same constant value. In correspondence with the detection signals E1 and E2, the differential transistors 1141 and 1142 distribute the value of the current of the constant current source 1140 to the collectors. Similarly, in correspondence with the detection signals F1 and F2, the differential transistors 1151 and 1152 distribute the value of the current of the constant current source 1150 to the collectors. Furthermore, in correspondence with the detection signals G1 and G2, the differential transistors 1161 and 1162 distribute the value of the current of the constant current source 1160 to the collectors. The collector currents of the transistors 1141 and 1162 are composed together and then output with being inverted by a current mirror circuit consisting of transistors 1143, 1144, and 1145. The collector currents of the transistors 1151 and 1142 are composed together and then output with being inverted by a current mirror circuit consisting of transistors 1153, 1154, and 1155. The collector currents of the transistors 1161 and 1152 are composed together and then output with being inverted by a current mirror circuit consisting of transistors 1163, 1164, and 1165. The output currents of the transistors 1144, 1154, and 1164 are composed together, and currents, each of which is about one third of the composed current, are output by a current mirror circuit consisting of transistors 1171, 1172, 1173, and 1174. The difference current between the transistors 1145 and 1172 is output as the altering signal H1 (outflow/inflow current). Similarly, the difference current between the transistors 1155 and 1173 is output as the altering signal H2 (outflow/inflow current). Furthermore, the difference current between the transistors 1165 and 1174 is output as the altering signal H3 (outflow/inflow current). Therefore, the altering signal H1 varies responding with the difference signal of the two-phase detection signals (E1 - E2) and (G1 - G2), the altering signal H2 in correspondence with the difference signal of the two-phase detection signals (F1 - F2) and (E1 - E2), and the altering signal H3 in correspondence with the difference signal of the two-phase detection signals (G1 - G2) and (F1 - F2). As a result, the altering signals H1, H2, and H3 are shifted in phase from the detection signals E1, F1, and G1 by about 30 deg.

The first distributing circuit 531 of the distribution block 513 of FIG. 23 obtains three-phase first distributed current signals to which the first output current signal D1 of the command output circuit 1053 is distributed in correspondence with the altering signals H1, H2, and H3 of the altering signal producing circuit 1022. The second distributing circuit 532 obtains three-phase second distributed current signals to which the second output current signal D2 of the command output circuit 1053 is distributed in correspondence with the altering signals H1, H2, and H3 of the altering signal producing circuit 1022. The distributing composer 1033 composes the first and second distributed current signals together into three-phase distributed signals, and supplies the distributed signals to the driving block 514. The specific configurations of the first distributing circuit 531 and the second distributing circuit 532 are the same as those shown in FIG. 16. Therefore, their description is omitted.

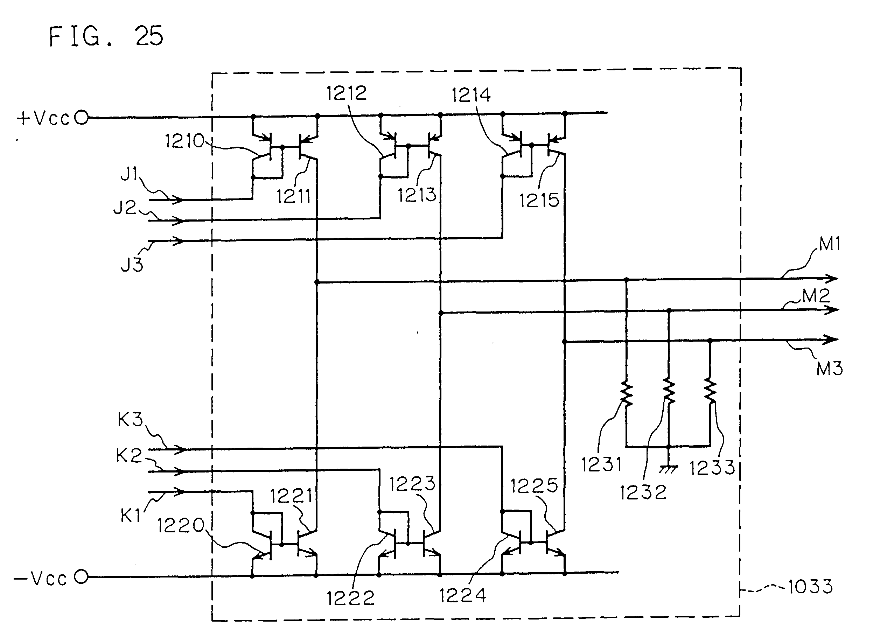

FIG. 25 specifically shows the configuration of the distributing composer 1033 of the distribution block 513. The currents of the first distributed current signals J1, J2, and J3 are inverted by a current mirror circuit consisting of transistors 1210 and 1211, that consisting of transistors 1212 and 1213, and that consisting of transistors 1214 and 1215, respectively. The currents of the second distributed current signals K1, K2, and K3 are inverted by a current mirror circuit consisting of transistors 1220 and 1221, that consisting of transistors 1222 and 1223, and that consisting of transistors 1224 and 1225, respectively. For each phase, the output terminals of these current mirror circuits are connected to each other so as to produce a difference current for the phase. A difference current (J1 - K1) between the currents J1 and K1 is supplied to a resistor 1231, so that a distributed signal M1 appears across the terminals of the resistor 1231. Similarly, a difference current (J2 - K2) between the currents J2 and K2 is supplied to a resistor 1232, so that a distributed signal M2 appears across the terminals of the resistor 1232. Furthermore, a difference current (J3 - K3) between the currents J3 and K3 is supplied to a resistor 1233, so that a distributed signal M3 appears across the terminals of the resistor 1233.

The driving block 514 of FIG. 23 comprises a first driving circuit 541, a second driving circuit 542, and a third driving circuit 543, and supplies driving signals Va, Vb, and Vc, which are obtained by amplifying the distributed signals M1, M2, and M3 of the distribution block 513, to the terminals of the three-phase coils 511A, 511B, and 511C. The configurations of the first driving circuit 541, the second driving circuit 542, and the third driving circuit 543 are the same as those shown in FIG. 18. Therefore, their description is omitted.

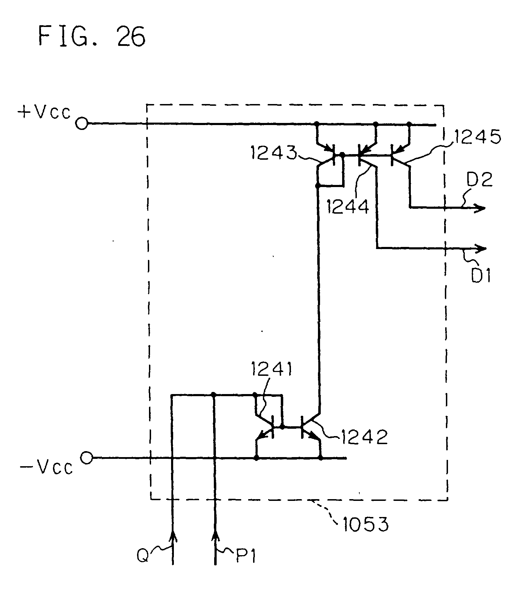

FIG. 26 specifically shows the configuration of the command output circuit 1053 of the command block 515. The first command current signal P1 of the command current circuit 551 and the multiplied command current signal Q of the multiplied command output circuit 552 are composed together to produce a composed command current signal. The first and second output current signals D1 and D2 which vary in correspondence with the composed command current signal are produced by a current mirror circuit consisting of transistors 1241 and 1242, and that consisting of transistors 1243, 1244, and 1245. The first output current signal D1 is supplied to the first distributing circuit 531 of the distribution block 513, and the second output current signal D2 to the second distributing circuit 532. The configurations of the command current circuit 551 and the multiplied command output circuit 552 are the same as those shown in Figs. 19 and 20. Therefore, their description is omitted.

Also in the thus configured embodiment, the distributed signals M1, M2, and M3 (or the driving signals Va, Vb, and Vc) are not affected by the amplitudes of the detection signals and the altering signals. In other words, the signals are free from influences due to variation in the sensitivities of the position detecting elements 630A, 630B, and 630C of the position detector 521, variation in the magnetic field of the field part 510, and variation in the gain of the altering signal producing circuit 1022, The distributed signals M1, M2, and M3 (or the driving signals Va, Vb, and Vc) vary analoguely sinusoidally in correspondence with the detection signals. Therefore, the distributed signals and the driving signals of a reduced distortion level can be obtained, with the result that a uniform torque is generated, so that the motor is smoothly driven. Furthermore, as the position detecting elements are disposed between the salient poles of the armature core, the motor structure can be miniaturized.

The configurations of the first to fourth embodiments described above may be modified in various manners. For example, the coil for each phase may be configured by connecting a plurality of coils in series or in parallel. Each coil may consist of a concentrated winding, or a distributed winding, or may be an air-core coil having no salient pole. The connection of the three-phase coils is not restricted to the Y-connection and the coils may be Δ-connected. The position detecting elements are not restricted to Hall elements and other magnetoelectrical converting elements. The relative positional relationships among the coils and the position detecting elements may be variously modified. In the embodiments, the phase shifting operation is achieved by one of the distributing composer and the altering signal producing circuit. The execution of the phase shifting operation is not restricted to the above, and may be shared by both the composer and the circuit. The structure of the motor is not restricted to the one wherein the field part has a plurality of poles (the number of poles is not limited to four), and may have any one as far as magnetic field fluxes generated by permanent magnet poles cross a coil and the intercrossing magnetic fluxes of the coil vary as the relative movement between the field part and the coil proceeds. For example, the motor may have a structure in which a bias magnetic field is applied by a permanent magnet and rotation or movement is realized while tooth of a field unit oppose those of salient poles on which coils are wound. The motor is not restricted to a rotary brushless motor, and may be a linear brushless motor in which the field part or the coils are linearly moved.

It is a matter of course that the invention may be variously modified without departing from the spirit of the invention, and such modifications are within the scope of the invention.

## Claims

1. A brushless motor comprising:
field permanent-magnet means (10; 510) for obtaining field magnetic fluxes;
three-phase coils (11A, 11B, 11C; 511A, 511B, 511C) which cross the field magnetic fluxes;
position detecting means (21; 521) for detecting relative position between said field permanent-magnet means and said three-phase coils;
command means (15; 515) for producing current signals corresponding to a command signal; and
driving means (14) for applying driving signals to said three-phase coils (11A, 11B, 11C);
**characterized by**
altering signal producing means (22; 522; 1022) for obtaining altering signals analoguely varying responding with output signals of said position detecting means;
first distributing means (31; 531) for distributing a first output current signal of said command means to three-phase first distributed current signals analoguely varying responding with output signals of said altering signal producing means;
second distributing means (32; 532) for distributing a second output current signal of said command means to three-phase second distributed current signals analoguely varying responding with output signals of said altering signal producing means; and
composing means (33; 533; 1033) for composing said first distributed current signals of said first distributing means and the second distributed current signals of said second distributing means, thereby obtaining three-phase distributed signals;
said driving means (14; 514) being for supplying driving signals corresponding to the three-phase distributed signals of said composing means, to said three-phase coils.

2. A brushless motor in accordance with claim 1,
wherein
said first distributing menas (31; 531) comprises:
three first diodes (180, 181, 182; 680, 681, 682) to which three-phase altering signals supplied from said altering signal producing means are applied; and
three first distributing transistors (185, 186, 187; 685, 686, 687) whereof the bases are respectively connected to said first diodes and the emitters whereto the output current signal of said command means is supplied are commonly connected to each other, and the three-phase first distributed current signals are obtained from the collectors. said first distributing means (31; 531).

3. A brushless motor in accordance with claim 1 or 2
wherein
said second distributing means (32; 532) comprises
three second diodes (200, 201, 202; 700, 701, 702) whereto three-phase altering signals supplied from said altering signal producing means are applied; and
three second distributing transistors (205, 206, 207; 705, 706, 707) whereof the bases are respectively connected to said second diodes and the emitters whereto the output current signal of said command means is supplied are commonly connected to each other, and the three-phase second distributed current signals are obtained from the collectors.

4. A brushless motor in accordance with claims 2 and 3,
wherein
said composing means (33; 533) obtains three-phase composed distributed current signals by composing the first and second distributed current signals for each phase, and comprises three resistors (241, 242, 243; 741, 742, 743) whereto the three-phase composed distributed current signals are supplied.

5. A brushless motor in accordance with any one of claims 1 to 4, wherein command means (15; 515) comprises:
means (301+302+303; 551+552+553) for obtaining a higher harmonic signal corresponding to the detection signals of said position detecting means (21; 521), multiplying the command signal by the higher harmonic signal, thereby obtaining the first and second current signals containing higher harmonic signal components, and respectively supplying the first and second output current signals corresponding to the current signal to said first and second distributing means.

6. A brushless motor in accordance with claim 5, wherein said command means (15; 515) comprises:
command current means (301; 551) for obtaining two command current signals corresponding to the command signal;
multiplication command means (302; 552) for obtaining a higher harmonic signal corresponding to the detection signals of said position detecting means, and obtaining a multiplied command current signal by multiplying one of the command current signals of said command current means by the higher harmonic signal; and
command output means (303; 553; 1053) for obtaining a composed command current signal which is obtained by composing the other command current signal of said command current means and the multiplied command current signal, and outputting the first and second output current signals corresponding to the composed command current signal to said first and second distributing means.

7. A brushless motor in accordance with claim 5,
wherein
said command means (15; 515) comprises:
multiplication command means (302; 552) for obtaining a multiplied command current signal which is obtained by multiplication of a higher harmonic signal which varies 6 times every one period of the detection signals of said position detecting means (21; 521).

## Patentansprüche

1. Bürstenloser Motor, aufweisend:
Eine Permanentmagnetfeldeinrichtung 10; 510 zum Erzielen von Magnetfeldflüssen;
Dreiphasenwicklungen 11A, 11B, 11C; 511A, 511B, 511C, die die Magnetfeldflüsse kreuzen;
eine Positionsermittlungseinrichtung 21, 521 zum Ermitteln der Relativposition zwischen der Permanentmagnetfeldeinrichtung und den Dreiphasenwicklungen;
eine Befehlseinrichtung 15; 515 zum Erzeugen von Stromsignalen, entsprechend einem Befehlssignal; und
eine Treibereinrichtung 14 zum Anlegen von Treibersignalen an die Dreiphasenwicklungen 11A, 11B, 11C;
**gekennzeichnet durch**
eine Anderungssignalerzeugungseinrichtung 22; 522; 1022 zum Gewinnen von Änderungssignalen, die, ansprechend auf Ausgangssignale der Positionsermittlungseinrichtung, analog variieren;
eine erste Verteilungseinrichtung 31; 531 zum Verteilen eines ersten Ausgangsstromsignals der Befehlseinrichtung auf erste Dreiphasenverteilungsstromsignale, die, ansprechend auf Ausgangssignale der Änderungssignalerzeugungseinrichtung, analog variieren;
eine zweite Verteilungseinrichtung 32; 532 zum Verteilen eines zweiten Ausgangsstromsignals der Befehlseinrichtung auf zweite Dreiphasenverteilungsstromsignale, die, ansprechend auf Ausgangssignale der Änderungssignalerzeugungseinrichtung, analog variieren; und
eine Zusammensetzeinrichtung 33; 533; 1033 zum Zusammensetzen der ersten verteilten Stromsignale der ersten Verteilungseinrichtung mit den zweiten verteilten Stromsignalen der zweiten Verteilungseinrichtung, um Dreiphasenverteilungssignale zu gewinnen;
wobei die Treibereinrichtung 14; 514 zum Zuführen von Treibersignalen, entsprechend den Dreiphasenverteilungssignalen der Zusammensetzeinrichtung, zu den Dreiphasenwicklungen dient.

2. Bürstenloser Motor nach Anspruch 1, wobei
die erste Verteilungseinrichtung 31, 531 aufweist:
Drei erste Dioden 180, 181, 182; 680, 681, 682, an die Dreiphasenänderungssignale angelegt werden, die von der Änderungssignalerzeugungseinrichtung zugeführt werden; und
drei erste Verteilungstransistoren 185, 186, 187; 685, 686, 687, deren Basen jeweils mit den ersten Dioden verbunden sind, und deren Emitter miteinander gemeinsam verbunden sind, denen das Ausgangsstromsignal der Befehlseinrichtung zugeführt wird, und die ersten Dreiphasenverteilungsstromsignale aus den Kollektoren der ersten Verteilungseinrichtung 31; 531 gewonnen werden.

3. Bürstenloser Motor nach Anspruch 1 oder 2, wobei
die zweite Verteilungseinrichtung 32; 532 aufweist:
Drei zweite Dioden 200, 201, 202; 700, 701, 702, an die Dreiphasenänderungssignale angelegt werden, die von der Änderungssignalerzeugungseinrichtung zugeführt werden; und
drei zweite Verteilungstransistoren 205,206, 207; 705, 706, 707, deren Basen jeweils mit den zweiten Dioden verbunden sind, und deren Emitter miteinander gemeinsam verbunden sind, an die das Ausgangsstromsignal der Befehlseinrichtung angelegt wird, und wobei die zweiten Dreiphasenverteilungsstromsignale von den Kollektoren gewonnen werden.

4. Bürstenloser Motor nach Anspruch 2 und 3, wobei
die Zusammensetzeinrichtung 33; 533 Dreiphasenzusammensetzungsverteilungsstromsignale gewinnt durch Zusammensetzen der ersten und zweiten Verteilungsstromsignale für jede Phase, wobei diese Einrichtung drei Widerstände 241, 242, 243; 741, 742, 743 umfasst, an die die Dreiphasenzusammensetzungsverteilungsstromsignale angelegt sind.

5. Bürstenloser Motor nach einem der Ansprüche 1 bis 4, wobei die Befehlseinrichtung 15; 515 aufweist:
Eine Einrichtung 301 + 302 + 303; 551 + 552 + 553 zum Gewinnen eines höher harmonischen Signals, entsprechend den Ermittlungssignalen der Positionsermittlungseinrichtung 21; 521, zum Multiplizieren des Befehlssignals mit dem höher harmonischen Signal, wodurch erste und zweite Stromsignale gewonnen werden, die höher harmonische Signalkomponenten enthalten, und zum Zuführen der ersten und zweiten Ausgangsstromsignale, entsprechend dem Stromsignal, zu den ersten und zweiten Verteilungseinrichtungen.

6. Bürstenloser Motor nach Anspruch 5, wobei die Befehlseinrichtung 15; 515 aufweist:
Eine Befehlsstromeinrichtung 301; 551 zum Gewinnen von zwei Befehlsstromsignalen, entsprechend dem Befehlssignal;
eine Multiplikationsbefehlseinrichtung 302; 552 zum Gewinnen eines höher harmonischen Signals, entsprechend den Ermittlungssignalen der Positionsermittlungseinrichtung, und zum Gewinnen eines multiplizierten Befehlsstromsignals durch Multiplizieren von einem der Befehlsstromsignale von der Befehlsstromeinrichtung mit dem höher harmonischen Signal; und
eine Befehlsabgabeeinrichtung 303; 553; 1053 zum Gewinnen eines zusammengesetzten Befehlsstromsignals, das gewonnen wird durch Zusammensetzen des anderen Befehlsstromsignals von der Befehlsstromeinrichtung mit dem multiplizierten Befehlsstromsignal und zum Ausgeben der ersten und zweiten Ausgangsstromsignale, entsprechend dem zusammengesetzten Befehlsstromsignal, an die ersten und zweiten Verteilungseinrichtungen.

7. Bürstenloser Motor nach Anspruch 5, wobei
die Steuereinrichtung 15; 515 aufweist:
Eine Multiplikationsbefehlseinrichtung 302; 552 zum Gewinnen eines multiplizierten Befehlsstromsignals, das gewonnen wird durch Multiplikation eines höher harmonischen Signals, das in jeder einzelnen Periode des Ermittlungssignals der Positionsermittlungseinrichtung 21; 521 6 mal variiert.

## Revendications

1. Moteur sans balai comprenant :
un moyen de champ à aimant permanent (10 ; 510) destiné à obtenir des flux de champ magnétique ;
des bobines à trois phases (11A, 11B, 11C ; 511A, 511B, 511C) qui croisent les flux de champ magnétique ;
un moyen de détection de position (21 ; 521) destiné à détecter la position relative entre ledit moyen de champ à aimant permanent et lesdites bobines à trois phases ;
un moyen de commande (15 ; 515) destiné à produire des signaux de courant correspondant à un signal de commande ; et
un moyen d'entraînement (14) destiné à appliquer des signaux d'entraînement aux dites bobines à trois phases (11A, 11B, 11C) ;
**caractérisé par**
un moyen de production de signaux de modification (22 ; 522 ; 1022) destiné à obtenir des signaux de modification variant de façon analogue en fonction des signaux de sortie dudit moyen de détection de position ;
un premier moyen de distribution (31 ; 531) destiné à distribuer un premier signal de courant de sortie dudit moyen de commande à trois premiers signaux de courant distribué à trois phases variant de façon analogue en fonction des signaux de sortie dudit moyen de production de signaux de modification ;
un second moyen de distribution (32 ; 532) ) destiné à distribuer un second signal de courant de sortie dudit moyen de commande à trois premiers signaux de courant distribué à trois phases variant de façon analogue en fonction des signaux de sortie dudit moyen de production de signaux de modification ; et
un moyen de composition (33 ; 533 ; 1033) destiné à composer lesdits premiers signaux de courant distribué dudit premier moyen de distribution et lesdits seconds signaux de courant distribués dudit second moyen de distribution, obtenant par ce moyen des signaux distribués à trois phases ;
ledit moyen d'entraînement (14 ; 514) étant destiné à fournir des signaux d'entraînement correspondant aux signaux distribués à trois phases dudit moyen de composition, aux dites bobines à trois phases.

2. Moteur sans balai selon la revendication 1, dans lequel
ledit premier moyen de distribution (31 ; 531) comprend :
trois premières diodes (180, 181, 182 ; 680, 681, 682) auxquelles sont appliqués les signaux de modification à trois phases fournis par ledit moyen de production de signaux de modification ; et
trois premiers transistors de distribution (185, 186, 187 ; 685, 686, 687) dans lesquels les bases sont connectées respectivement aux dites premières diodes et les émetteurs auxquels le signal de courant de sortie dudit moyen de commande est fourni sont connectés les uns aux autres, et les premiers signaux de courant distribué à trois phases sont obtenus à partir des collecteurs.

3. Moteur sans balai selon la revendication 1 ou 2, dans lequel
ledit deuxième moyen de distribution (32 ; 532) comprend
trois secondes diodes (200, 201, 202 ; 700, 701, 702) auxquelles les signaux de modification à trois phases fournis par ledit moyen de production de signaux de modification sont appliqués ; et
trois seconds transistors de distribution -205, 206, 207 ; 705, 706, 707) dans lesquels les bases sont connectées respectivement aux dites secondes diodes et les émetteurs auxquels le signal de courant de sortie dudit moyen de commande est fourni sont connectés les uns aux autres, et les seconds signaux de courant distribué à trois phases sont obtenus à partir des collecteurs.

4. Moteur sans balai selon les revendications 2 et 3, dans lequel
ledit moyen de composition (33 ; 533) obtient des signaux de courant distribué composé à trois phases en composant les premiers et seconds signaux de courant distribué pour chaque phase, et comprend trois résistances (241, 242, 243 ; 741, 742, 743) auxquelles sont fournis les trois signaux de courant distribué composé à trois phases.

5. Moteur sans balai selon l'une quelconque des revendications 1 à 4, dans lequel ledit moyen de commande (15 ; 515) comprend :
un moyen (301+302+303 ; 551+552+553) destiné à obtenir un signal harmonique plus élevé correspondant aux signaux de détection dudit moyen de position de détection (21 ; 521), à multiplier le signal de commande par le signal harmonique plus élevé, obtenant par ce moyen les premiers et seconds signaux de courant qui contiennent des composants de signal harmonique plus élevé, et à fournir respectivement les premiers et seconds signaux de courant de sortie correspondant au signal de courant aux dits premier et deuxième moyen de distribution.

6. Moteur sans balai selon la revendication 5, dans lequel
ledit moyen de commande (15 ; 515) comprend :
un moyen de commande de courant (301 ; 551) destiné à obtenir deux signaux de commande de courant correspondant au signal de commande ;
un moyen de multiplication de commande (302 ; 552) destiné à obtenir un signal harmonique plus élevé correspondant aux signaux de détection dudit moyen de détection de position, et à obtenir un signal de commande de courant multiplié en multipliant l'un des signaux de commande de courant dudit moyen de commande de courant par le signal harmonique plus élevé ; et
un moyen de sortie de commande (303 ; 553 ; 1053) destiné à obtenir un signal de commande de courant composé, lequel est obtenu en composant l'autre signal de commande de courant dudit moyen de commande de courant et le signal de commande de courant multiplié, et à sortir les premier et second signaux de courant de sortie correspondant au signal de commande de courant composé vers lesdits premier et deuxième moyens de distribution.

7. Moteur sans balai selon la revendication 5, dans lequel
ledit moyen de commande (15 ; 515) comprend :
un moyen de commande de multiplication (302 ; 552) destiné à obtenir un signal de commande de courant multiplié, lequel est obtenu par la multiplication d'un signal harmonique plus élevé qui varie 6 fois pour chaque période des signaux de détection dudit moyen de détection de position (21 ; 521).
